# EUROPÄISCHE PATENTSCHRIFT

(11) **EP 1 926 798 B1**
(45) Veröffentlichungstag und Bekanntmachung des Hinweises auf die Patenterteilung: **30.09.2009**
(21) Anmeldenummer: 06776858.0
(22) Anmeldetag: 16.08.2006
(51) Int. Cl.: C09K 19/32, C09K 19/30

(54) **CYCLOBUTAN- UND SPIRO[3.3]HEPTANVERBINDUNGEN**
CYCLOBUTANE AND SPIRO[3.3]HEPTANE COMPOUNDS
COMPOSÉS DE CYCLOBUTANE ET DE SPIRO[3.3]HEPTANE

(30) Priorität: 19.09.2005 DE 102005044705
(43) Veröffentlichungstag der Anmeldung: 04.06.2008
(73) Patentinhaber: Merck Patent GmbH, 64293 Darmstadt (DE)
(72) Erfinder: REIFFENRATH, Volker, 64380 Rossdorf (DE); BREMER, Matthias, 64295 Darmstadt (DE); KLASEN-MEMMER, Melanie, 67259 Heuchelheim (DE)
(86) Internationale Anmeldenummer: PCT/EP2006/008050
(87) Internationale Veröffentlichungsnummer: WO 2007/033732

(56) Entgegenhaltungen:
- EP-A- 1 482 018
- WO-A-88/09322
- WO-A-92/16483
- WO-A-20/04050796
- DE-A1- 3 807 872
- DE-A1- 4 219 283
- DE-A1- 4 235 974
- DE-A1- 4 235 975
- DE-A1- 4 239 169
- DE-A1- 10 338 111
- DE-A1- 19 857 506
- GB-A- 2 155 946
- US-A- 5 545 747
- CHAN L K M ET AL: "SYNTHESIS AND LIQUID CRYSTAL PROPERTIES OF DIMETHYLENE LINKED COMPOUMDS INCORPORATING THE CYCLOBUTANE OR SPIRO 3.3 HEPTANE RINGS" MOLECULAR CRYSTALS AND LIQUID CRYSTALS (INC. NONLINEAR OPTICS ), GORDON AND BREACH SCIENCE PUBLISHERS, READING, GB, Bd. 168, 1. März 1989 (1989-03-01), Seiten 229-245, XP000102961

## Beschreibung

Die vorliegende Erfindung betrifft Cyclobutan- und Spiro[3.3]heptan-verbindungen, ein Verfahren zu ihrer Herstellung, ihre Verwendung als Komponenten in flüssigkristallinen Medien sowie elektrooptische Anzeigeelemente, die diese flüssigkristallinen Medien enthalten.

Flüssigkristalle haben ein breites Anwendungsfeld gefunden, seitdem vor etwa 30 Jahren die ersten kommerziell anwendbaren flüssigkristallinen Verbindungen gefunden wurden. Bekannte Anwendungsgebiete sind insbesondere Anzeigen für Uhren und Taschenrechner, sowie große Anzeigetafeln, wie sie in Bahnhöfen, Flughäfen und Sportarenen verwendet werden. Weitere Anwendungsgebiete sind Anzeigen von tragbaren Computern und Navigationssystemen sowie Fernseh- und Videoapplikationen. Insbesondere für die zuletzt genannten Anwendungen werden hohe Anforderungen an Schaltzeiten und den Kontrast der Abbildungen gestellt.

Die räumliche Ordnung der Moleküle in einem flüssigkristallinen Medium bewirkt, dass viele seiner Eigenschaften richtungsabhängig sind. Von Bedeutung für den Einsatz in Flüssigkristallanzeigen sind dabei insbesondere die Anisotropien im optischen, dielektrischen und elastomechanischen Verhalten. Je nachdem, ob die Moleküle mit ihren Längsachsen senkrecht oder parallel zu den beiden Platten eines Kondensators orientiert sind, hat dieser eine andere Kapazität; die Dielektrizitätskonstante ε des flüssigkristallinen Mediums ist also für die beiden Orientierungen verschieden groß. Substanzen, deren Dielektrizitätskonstante bei senkrechter Orientierung der Moleküllängsachsen zu den Kondensatorplatten größer ist als bei paralleler Anordnung, werden als dielektrisch positiv bezeichnet. Mit anderen Worten: Ist die Dielektrizitätskonstante ε_{∥} parallel zu den Moleküllängsachsen größer als die Dielektrizitätskonstante ε_{⊥} senkrecht zu den Moleküllängsachsen, so ist die dielektrische Anisotropie Δε = ε_{∥} - ε_{⊥} größer null. Die meisten Flüssigkristalle, die in herkömmlichen Displays Verwendung finden, fallen in diese Gruppe.

Für die dielektrische Anisotropie spielen sowohl die Polarisierbarkeit des Moleküls als auch permanente Dipolmomente eine Rolle. Beim Anlegen einer Spannung an das Display richtet sich die Längsachse der Moleküle so aus, dass die größere der dielektrischen Konstanten wirksam wird. Die Stärke der Wechselwirkung mit dem elektrischen Feld hängt dabei von der Differenz der beiden Konstanten ab. Bei kleinen Differenzen sind höhere Schaltspannungen erforderlich als bei großen. Durch den Einbau geeigneter polarer Gruppen, wie z.B. von Nitrilgruppen oder Fluor, in die Flüssigkristallmoleküle lässt sich ein weiter Bereich von Arbeitsspannungen realisieren.

Bei den in herkömmlichen Flüssigkristallanzeigen verwendeten mesogenen beziehungsweise flüssigkristallinen Molekülen ist das entlang der Moleküllängsachse orientierte Dipolmoment größer als das senkrecht zur Moleküllängsachse orientierte Dipolmoment. Bei den am weitesten verbreiteten TN-Zellen (abgeleitet von (englisch) "twisted nematic", verdrillt nematisch) ist eine nur etwa 5 bis 10 µm dicke flüssigkristalline Schicht zwischen zwei planparallelen Glasplatten angeordnet, auf die jeweils eine elektrisch leitende, transparente Schicht aus Zinnoxid oder Indium-Zinnoxid (ITO) als Elektrode aufgedampft ist. Zwischen diesen Filmen und der flüssigkristallinen Schicht befindet sich eine ebenfalls transparente Orientierungsschicht, die meist aus einem Kunststoff (z.B. Polyimide) besteht. Sie dient dazu, durch Oberflächenkräfte die Längsachsen der benachbarten kristallinen Moleküle in eine Vorzugsrichtung zu bringen, so dass sie im spannungsfreien Zustand einheitlich mit der gleichen Orientierung flach oder mit demselben kleinen Anstellwinkel (englisch: "tilt angle") auf der Innenseite der Displayfläche aufliegen. Auf der Außenseite des Displays sind zwei Polarisationsfolien, die nur linear polarisiertes Licht ein- und austreten lassen, in einer bestimmten Anordnung aufgebracht. Mit Flüssigkristallen, bei denen das größere Dipolmoment parallel zur Längsachse des Moleküls orientiert ist, sind bereits sehr leistungsfähige Displays entwickelt worden. Dabei kommen meist Mischungen von 5 bis 20 Komponenten zum Einsatz, um einen ausreichend breiten Temperaturbereich der Mesophase sowie kurze Schaltzeiten und niedrige Schwellenspannungen zu erreichen. Schwierigkeiten bereitet jedoch noch die starke Blickwinkelabhängigkeit bei Flüssigkristallanzeigen, wie sie beispielsweise für Laptops verwendet werden. Die beste Abbildungsqualität lässt sich erreichen, wenn die Fläche des Displays senkrecht zur Blickrichtung des Betrachters steht. Wird das Display relativ zur Betrachtungsrichtung gekippt, verschlechtert sich die Abbildungsqualität unter Umständen drastisch. Für einen höheren Komfort ist man bemüht, den Winkel, um den das Display von der Blickrichtung eines Betrachters ohne wesentliche Minderung der Abbildungsqualität verkippt werden kann, möglichst groß zu gestalten. In jüngerer Zeit sind Versuche unternommen worden, zur Verbesserung der Blickwinkelabhängigkeit flüssigkristalline Verbindungen einzusetzen, deren Dipolmoment senkrecht zur Moleküllängsachse größer ist als parallel zur Längsachse des Moleküls. Die dielektrische Anisotropie Δε ist negativ. Im feldfreien Zustand werden diese Moleküle senkrecht zur Glasfläche des Displays orientiert. Durch Anlegen eines elektrischen Feldes orientieren sie sich mehr oder weniger parallel zu den Glasflächen. Durch Realisierung mehrerer Domänen konnte unter Verwendung von flüssigkristallinen Medien mit negativer dielektrischer Anisotropie eine Verbesserung der Blickwinkelabhängigkeit erreicht werden. Auch können mit dieser Technologie kürzere Schaltzeiten in Displays und bessere Kontraste erzielt werden. Derartige Displays werden als VA-TFT-Displays bezeichnet (abgeleitet von (englisch): "vertically aligned").

Die Entwicklung auf dem Gebiet der flüssigkristallinen Materialien ist bei weitem noch nicht abgeschlossen. Zur Verbesserung der Eigenschaften flüssigkristalliner Anzeigeelemente ist man ständig bemüht, neue Verbindungen zu entwickeln, die eine Optimierung derartiger Displays ermöglichen.

Die DE 10338111 A1, DE 4239169 A1, GB 2155946 A, DE 4219283 A1, WO 92/16483, WO 2004/050796 A1, und WO 88/09322 A1 offenbaren Cyclobutan- oder Spiro[3.3]heptanverbindungen ohne die 2,3-Difluorphenylen-Gruppe.

In der DE 4235975 A1 und DE 4235974 A1 werden Methylencyclobutane und entsprechende Spiro[3.3]heptane offenbart ohne die 2,3-Difluorphenylen-Gruppe.

Die DE 3807872 A1 offenbart 2,3-Difluorphenylenverbindungen, aber keine Cyclobutan- oder Spiro[3.3]heptanverbindungen.

Eine Aufgabe der vorliegenden Erfindung ist es, Verbindungen mit vorteilhaften Eigenschaften für den Einsatz in flüssigkristallinen Medien zur Verfügung zu stellen. Als vorteilhaft gilt es, je nach Einsatzgebiet, bestimmte stoffliche Parameter einzuhalten. Darüber hinaus ist es in den meisten Fällen wichtig, ein ausgewogenes Verhältnis mehrerer Stoffeigenschaften gleichzeitig zu erreichen. Ebenso ist in der Praxis das Verhalten der Verbindungen in Mischung mit anderen Komponenten in die Betrachtung mit einzubeziehen. Daher lassen sich generell sehr vielseitige Anforderungen an neue Komponenten von flüssigkristallinen Mischungen formulieren. Für die praktische Anwendung ist es vorteilhaft, ein größtmögliches Repertoire an Verbindungen zu besitzen, mit denen sich alle erforderlichen Kombinationen von erwünschten Stoffeigenschaften realisieren lassen.

Diese Aufgabe wird erfindungsgemäß gelöst durch die Bereitstellung von Verbindungen der allgemeinen Formel I 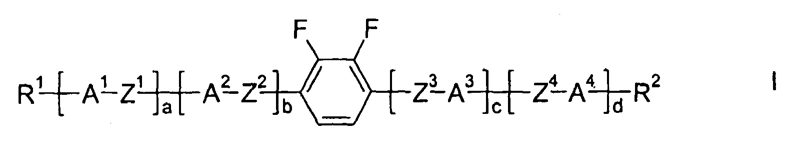 worin, jeweils unabhängig voneinander, gleich oder verschieden,
- R¹ und R²: Wasserstoff, ein unsubstituiertes oder ein einfach oder mehrfach mit F substituiertes Alkanyl, Alkoxy, Alkenyl oder Alkinyl mit bis zu 15 Kohlenstoffatomen bedeuten, wobei in diesen Resten auch eine oder mehrere CH₂-Gruppen jeweils unabhängig voneinander durch -O-, -S-, -SO₂-, -CO-, -(CO)O-, -O(CO)- oder -O(CO)-O- so ersetzt sein können, dass Heteroatome nicht direkt verknüpft sind, oder eine Gruppe der Formel 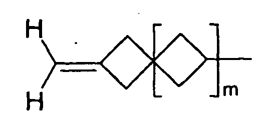
- A¹, A², A³ und A⁴: Cyclohexylen, worin auch ein oder zwei CH₂ gegen O ersetzt sein können, Phenylen, das unsubstituiert oder ein- oder zweifach mit F substituiert sein kann, eine Einfachbindung oder 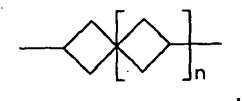
- Z¹, Z², Z³ und Z⁴: eine Einfachbindung, -CF₂O-, -OCF₂-, -CH₂CH₂-, -CF₂CF₂-, -CF₂CH₂-, -CH₂CF₂-, -CHF-CHF-, -(CO)O-, -O(CO)-, -CH₂O-, -OCH₂-, -CF=CH-, -CH=CF-, -CF=CF-, -CH=CH- oder -C≡C-,
- a, b, c und d: 0, 1 oder 2, und
- n, m: 0 oder 1
bedeuten,
mit der Maßgabe, dass mindestens eine Gruppe aus R¹ und R² 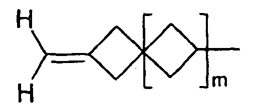 oder mindestens eine Gruppe aus A¹, A², A³ und A⁴ 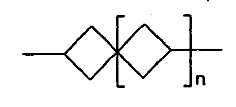 bedeutet.

Treten A¹⁻⁴ oder Z¹⁻⁴ in den Formel mehrmals auf (a, b, c oder d = 2), so können sie unabhängig voneinander gleiche oder verschiedene Bedeutung annehmen.

Bevorzugte Verbindungen besitzen ein negatives Δε und eignen sich daher insbesondere für eine Verwendung in VA-TFT-Displays. Vorzugsweise besitzen die erfindungsgemäßen Verbindungen ein Δε < -2 und besonders bevorzugt ein Δε < -5. Sie zeigen eine sehr gute Verträglichkeit mit den üblichen, in Flüssigkristallmischungen für Displays verwendeten Substanzen.

Ferner weisen die erfindungsgemäßen Verbindungen der Formel I insbesondere für die Verwendung in VA-TFT-Displays geeignete Werte der optischen Anisotropie Δn auf. Bevorzugt besitzen die erfindungsgemäßen Verbindungen ein Δn von größer als 0,02 und kleiner als 0,30, bevorzugt von größer als 0,04 und kleiner als 0,15.

Auch die weiteren physikalischen, physikochemischen beziehungsweise elektrooptischen Parameter der erfindungsgemäßen Verbindungen sind für den Einsatz der Verbindungen in flüssigkristallinen Medien von Vorteil. Die Verbindungen weisen insbesondere eine ausreichende Breite der nematischen Phase und eine gute Tieftemperatur- und Langzeitstabilität sowie ausreichend hohe Klärpunkte auf. Insbesondere weisen sie eine geringe Rotationsviskosität bei gleichzeitig relativ hohen Klärpunkten auf. Ferner zeichnen sich die erfindungsgemäßen Verbindungen durch einen hohen spezifischen Widerstand aus.

Die erfindungsgemäßen Verbindungen der Formel I eignen sich ferner zur Herstellung weiterer, gegebenenfalls komplexerer mesogener beziehungsweise flüssigkristalliner Substanzen, die Cyclobutan- oder Spiro[3.3]heptan sowie ein 2,3-Difluorphenylen als Strukturelemente besitzen.

Sofern R¹ und R² in Formel I jeweils unabhängig voneinander einen Alkanylrest und/oder einen Alkoxyrest (Alkyloxyrest) mit 1 bis 15 C-Atomen darstellen, sind diese geradkettig oder verzweigt. Vorzugsweise ist jeder dieser Reste geradkettig, hat 1, 2, 3, 4, 5, 6 oder 7 C-Atome und ist demnach vorzugsweise Methyl, Ethyl, Propyl, Butyl, Pentyl, Hexyl, Heptyl, Methoxy, Ethoxy, Propoxy, Butoxy, Pentoxy, Hexoxy oder Heptoxy.

R¹ und R² in Formel I können jeweils unabhängig voneinander auch ein Oxaalkylrest sein, d.h. ein Alkanylrest, in dem mindestens eine der nichtterminalen CH₂-Gruppen des Alkanylrests durch -O- ersetzt ist, vorzugsweise geradkettiges 2-Oxapropyl (= Methoxymethyl), 2- (= Ethoxymethyl) oder 3-Oxabutyl (= Methoxyethyl), 2-, 3- oder 4-Oxapentyl, 2-, 3-, 4- oder 5-Oxahexyl, 2-, 3-, 4-, 5- oder 6-Oxaheptyl. In entsprechender Weise können R¹ und R² in Formel I auch unabhängig voneinander Thioalkanyl- bzw. Sulfonalkanylreste sein, d.h. Alkanylreste, in denen eine CH₂-Gruppe durch -S- beziehungsweise -SO₂- ersetzt ist.

R¹ und R² in Formel I können ferner jeweils unabhängig voneinander ein Alkenylrest mit 2 bis 15 C-Atomen sein, der geradkettig oder verzweigt ist und wenigstens eine C-C-Doppelbindung aufweist. Vorzugsweise ist er geradkettig und hat 2 bis 7 C-Atome. Er ist demnach vorzugsweise Vinyl, Prop-1- oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl. Sind die beiden C-Atome der C-C-Doppelbindung substituiert, kann der Alkenylrest als E- und/oder Z-Isomer (trans/cis) vorliegen. Im allgemeinen sind die jeweiligen E-Isomeren bevorzugt.

In gleicher Weise wie bei einem Alkanylrest kann auch bei einem Alkenylrest wenigstens eine der CH₂-Gruppen durch Sauerstoff, Schwefel oder -SO₂- ersetzt sein. Bei dem Ersatz durch -O- liegt dann ein Alkenyloxyrest (mit entständigem Sauerstoff) beziehungsweise ein Oxaalkenylrest (mit nicht-terminalem Sauerstoff) vor.

R¹ und R² in Formel I können unabhängig voneinander auch ein Alkinylrest mit 2 bis 15 C-Atomen sein, der geradkettig oder verzweigt ist und wenigstens eine C-C-Dreifachbindung aufweist.

R¹ und R² in Formel I können jeweils unabhängig voneinander ein Alkanylrest mit 1 bis 15 C-Atomen sein, in dem eine CH₂-Gruppe durch -O-und eine durch -CO- ersetzt ist, wobei diese bevorzugt benachbart sind. Somit beinhaltet dieser eine Acyloxygruppe -CO-O- oder eine Oxycarbonylgruppe -O-CO-. Vorzugsweise ist dieser Rest geradkettig und hat 2 bis 6 C-Atome. Dabei sind die folgenden dieser Reste bevorzugt: Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyloxypropyl, 4-Acetyloxybutyl, Methoxycarbonyl, Ethoxycarbonyl, Propoxycarbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)ethyl, 3-(Methoxycarbonyl)propyl, 3-(Ethoxycarbonyl)-propyl oder 4-(Methoxycarbonyl)butyl. Ferner kann ein Alkanylrest auch eine -O(CO)-O-Einheit aufweisen. Auch der Ersatz einer CH₂-Gruppe durch lediglich eine -CO-Gruppe (Carbonyl-funktion) ist möglich.

R¹ und R² in Formel I können jeweils unabhängig voneinander ein Alkenylrest mit 2 bis 15 C-Atomen sein, in dem eine CH₂-Gruppe, bevorzugt in Nachbarschaft zu einer unsubstituierten oder substituierten -C=C-Einheit, durch -CO-, -(CO)O-, -O(CO)- oder -O(CO)-O- ersetzt ist, wobei dieser Rest geradkettig oder verzweigt sein kann. Vorzugsweise ist der Rest geradkettig und hat 4 bis 13 C-Atome. Besonders bevorzugt sind dabei Acryloyloxymethyl, 2-Acryloyloxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyloxynonyl, Methacryloyloxymethyl, 2-Methacryloyloxyethyl, 3-Methacryloyloxypropyl, 4-Methacryloyloxybutyl, 5-Methacryloyloxypentyl, 6-Methacryloyloxyhexyl, 7-Methacryloyloxyheptyl oder 8-Methacryloyloxyoctyl. Entsprechend kann auch in einem Alkinylrest insbesondere in Nachbarschaft zu einer substituierten -C≡C-Einheit eine CH₂-Gruppe durch -CO-, -(CO)O-, -O(CO)- oder -O(CO)-O- ersetzt sein.

R¹ und R² in Formel I können jeweils unabhängig voneinander ein Alkanylrest sein, in dem zwei oder mehr CH₂-Gruppen durch -O- und/oder -CO-O- ersetzt sind, wobei dieser geradkettig oder verzweigt sein kann. Vorzugsweise ist er verzweigt und hat 3 bis 12 C-Atome.

R¹ und R² in Formel I können jeweils unabhängig voneinander ein einfach oder mehrfach mit F substituierter Alkanylrest oder Alkoxyrest mit 1 bis 15 C-Atomen oder ein Alkenylrest, Alkenyloxyrest oder Alkinylrest mit 2 bis 15 C-Atomen sein, wobei diese Reste vorzugsweise geradkettig sind. Die einfach oder mehrfach fluorierten Reste werden auch als "Fluoralkyl", "Fluoralkanyl", "Fluoralkoxy", "Fluoralkenyl", "Fluoralkenyloxy" beziehungsweise "Fluoralkinyl" bezeichnet. Bei Einfachsubstitution kann der Fluor in beliebiger Position sein, vorzugsweise ist er in ω-Position.

Bevorzugt bedeuten R¹ und R² unabhängig voneinander Alkanyl, Alkenyl oder Alkoxy, jeweils mit bis zu 8 Kohlenstoffatomen, Wasserstoff oder eine Gruppe der Formel 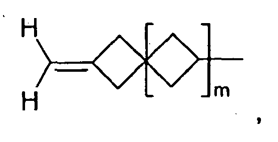 besonders bevorzugt Alkanyl, Alkoxy oder eine Gruppe der Formel

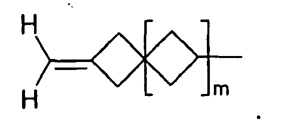

Insbesondere steht R¹ für Alkyl, Alkenyl oder eine Gruppe der Formel 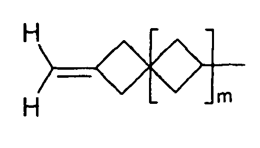 und R² steht bevorzugt für Alkyl oder Alkoxy.

Die Ringe A¹, A², A³ und A⁴ sind bevorzugt, unabhängig voneinander, aus der Gruppe ausgewählt, die umfasst:

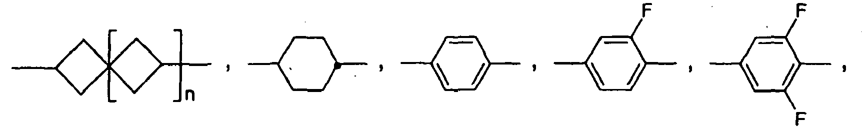

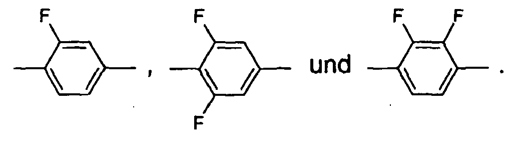

Unter den Phenylenringen sind dabei bevorzugt

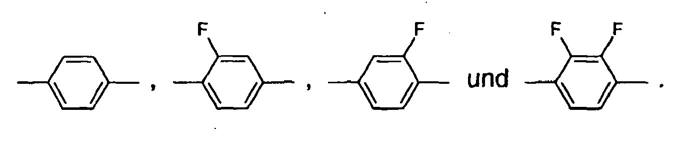

Die Verbindungen der Formel I enthalten mindestens eines der Strukturelemente Spiro[3.3]heptanring und Cyclobutanring. Die Verbindungen der Formel I enthalten vorzugsweise gleichzeitig nur einen Spiro[3.3]heptanring bzw. nur einen Cyclobutanring. Wenn eine der Gruppen aus R¹ und R² eine Gruppe der Formel 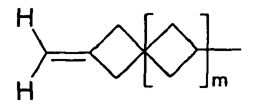 darstellt, dann sind die Ringe A¹, A², A³ und A⁴ vorzugsweise Cyclohexylen, worin auch ein oder zwei CH₂ gegen O ersetzt sein können oder ein 1,4-Phenylen, das unsubstituiert oder ein- oder zweifach mit F substituiert sein kann.

Für den Fall, dass wenigstens eine der Gruppen aus A¹, A², A³ und A⁴ eine Gruppe der Formel 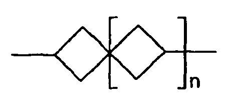 darstellt, dann sind R¹ und R² vorzugsweise unabhängig voneinander Wasserstoff, ein unsubstituiertes oder ein einfach oder mehrfach mit F substituiertes Alkanyl, Alkoxy, Alkenyl oder Alkinyl mit bis zu 15 Kohlenstoffatomen, wobei in diesen Resten auch eine oder mehrere CH₂-Gruppen jeweils unabhängig voneinander durch -O-, -S-, -SO₂-, -CO-, -(CO)O-, -O(CO)- oder -O(CO)-O- so ersetzt sein können, dass Heteroatome nicht direkt verknüpft sind. Bevorzugt sind für diesen Fall R¹ und R² Alkanyl, Alkenyl oder Alkoxy, jeweils mit bis zu 8 Kohlenstoffatomen.

Die Zähler a, b, c und d sind vorzugsweise so gewählt, dass die Anzahl der Ringe A¹⁻⁴ zusammen mit der Anzahl der Ringe in R¹ und R² im Bereich 1 bis 3 liegt, insbesondere im Bereich 1 bis 2. Enthalten R¹ und R² kein Ringelement, so ist a + b + c + d im Bereich 1 bis 3, bevorzugt 1 bis 2. Enthalten R¹ und R² zusammen genau ein Ringelement, so ist a + b + c + d im Bereich 0 bis 2, bevorzugt 0 bis 1. Enthalten R¹ und R² zusammen genau zwei Ringelemente, so ist a + b + c + d im Bereich 0 bis 1, bevorzugt 0.

Die gesamte Anzahl der Ringsysteme in den erfindungsgemäßen Verbindungen ist ganz besonders bevorzugt 3, wobei das Spirosystem als ein Ringsystem zählt.

In einer bevorzugten Ausführungsform der Erfindung sind die Verbindungen der Formel I symmetrisch indem c + d = 0 ist und a + b > 0.

Die erfindungsgemäßen Verbindungen der Formel I weisen bevorzugt neben dem zentralen 2,3-Difluorphenylenring entweder einen weiteren oder zwei weitere Ringsysteme der Formeln A¹, A², A³ und/oder A⁴ auf, d. h. bevorzugt ist a + b + c + d 1 oder 2. Sind zwei weitere Ringe vorhanden, so können sie beide auf einer Seite des 2,3-Difluorphenylenrings stehen oder sie sind auf beide Seiten des Phenylenrings verteilt.

In einer bevorzugten Ausführungsform der Erfindung sind m und n 1, um zu Verbindungen mit breiteren, nematischen Phasenbereichen zu gelangen. Alternativ sind m und n 0, um zu niedrigeren Werten der Rotationsviskosität zu gelangen.
Z¹, Z², Z³ und Z⁴ sind unabhängig voneinander bevorzugt eine Einfachbindung, -CH₂O-, -OCH₂-, -CH₂CH₂-, -CF₂CF₂- oder -CH=CH-, besonders bevorzugt eine Einfachbindung, -CH₂O- oder -OCH₂- und insbesondere eine Einfachbindung.

Besonders bevorzugt sind Verbindungen, bei denen mindestens einer der Ringe A¹⁻⁴ ein 1,4-Cyclohexylen ist.

Bevorzugte erfindungsgemäße Verbindungen werden durch die allgemeinen Formeln IA bis IC wiedergegeben, worin R¹¹ und R²² unabhängig voneinander Wasserstoff, ein unsubstituiertes oder ein einfach oder mehrfach mit F substituiertes Alkanyl, Alkoxy, Alkenyl oder Alkinyl mit bis zu 15 Kohlenstoffatomen bedeuten, wobei in diesen Resten auch eine oder mehrere CH₂-Gruppen jeweils unabhängig voneinander durch -O-, -S-, -SO₂-, -CO-, -(CO)O-, -O(CO)- oder -O(CO)-O- so ersetzt sein können, dass Heteroatome nicht direkt verknüpft sind: 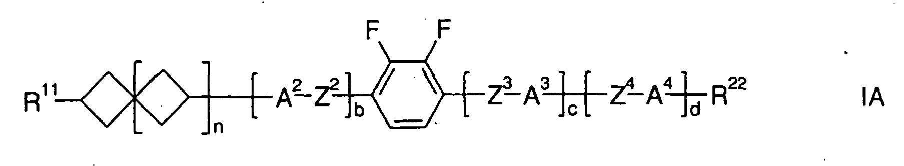 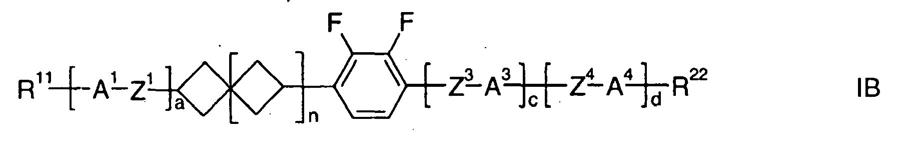 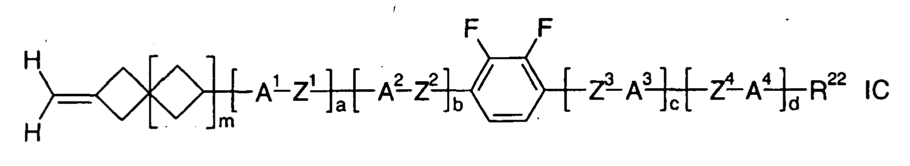 Bevorzugt sind Verbindungen der Formel IA und IB, insbesondere solche, worin c + d = 0 und/oder n = 1 ist.

Unter den Verbindungen der Formel IA sind besonders bevorzugt Verbindungen der allgemeinen Formeln IA1 bis IA8

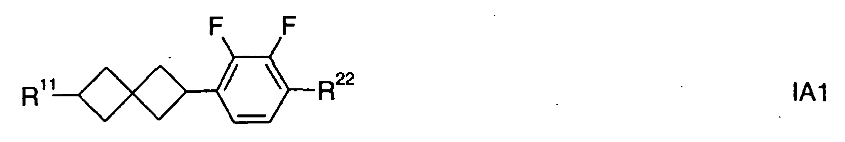

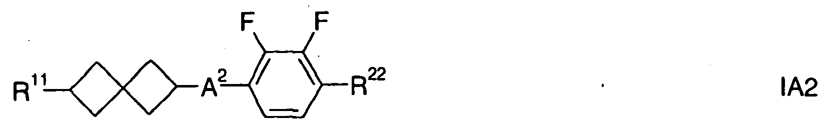

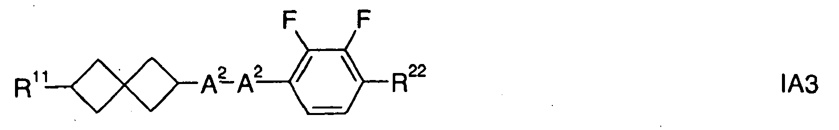

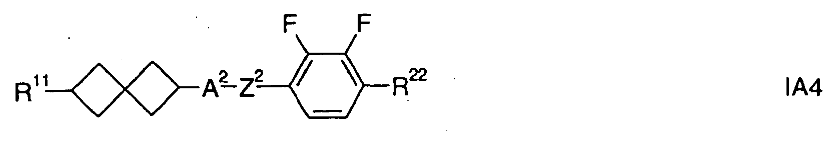

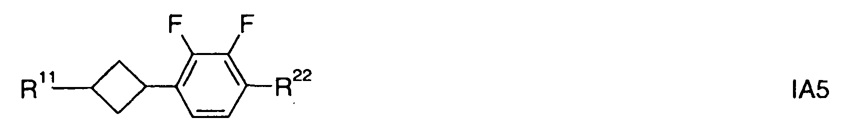

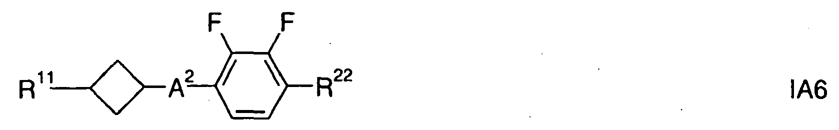

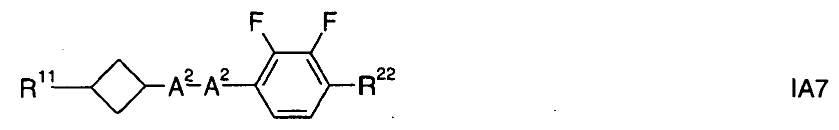

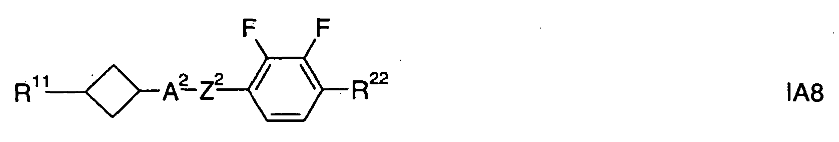

Darunter sind besonders bevorzugt die Verbindungen der Formeln IA1, IA2, IA6 und IA7.

Beispielhafte Verbindungen der Formel IA sind die folgenden Verbindungen: 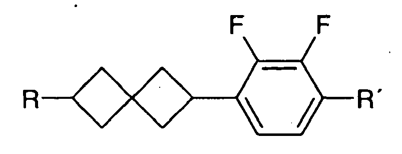 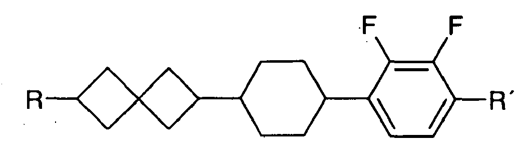 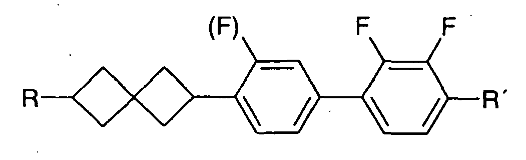 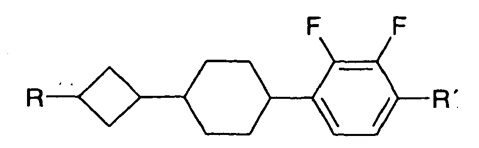 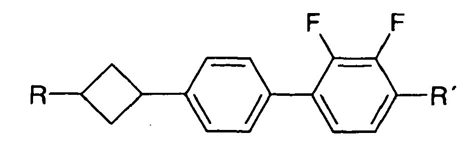 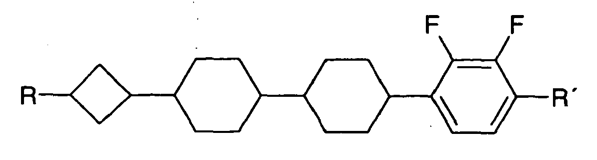 worin R und R' unabhängig ein Alkyl, Alkoxy, Alkenyl oder Alkenyloxy bedeuten. R' bedeutet vorzugsweise Alkoxy, insbesondere mit 1-5 C-Atomen, z. B. eine Methoxy- oder Ethoxygruppe. Der Rest R bedeutet beispielsweise eine Ethyl-, n-Propyl- oder n-Butylgruppe.

Unter den Verbindungen der Formel IB sind besonders bevorzugt die Verbindungen der allgemeinen Formeln IB1 bis IB8:

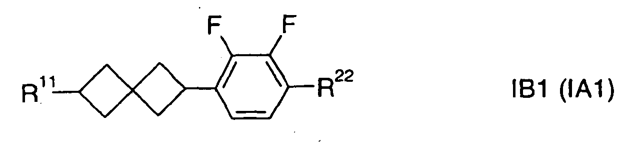

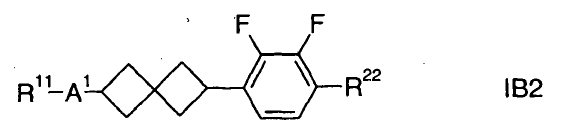

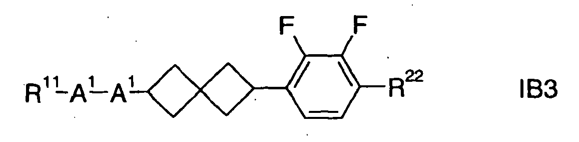

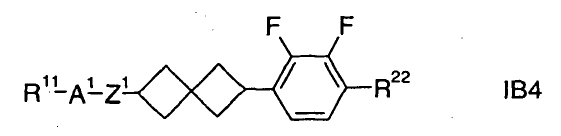

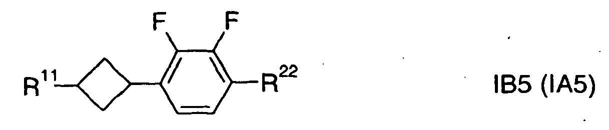

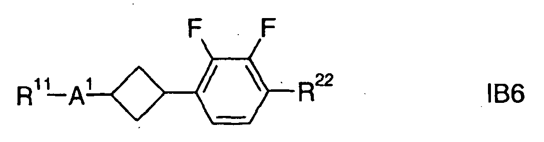

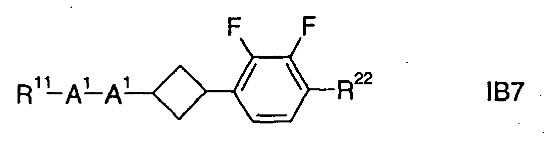

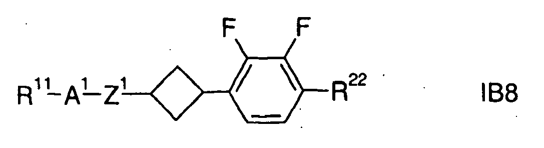

Darunter sind besonders bevorzugt die Verbindungen der Formeln IB1; IB2, IB5 und IB6, insbesondere der Formel IB2.

Beispielhafte Verbindungen der Formel IB sind die folgenden Verbindungen: 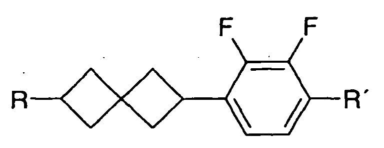 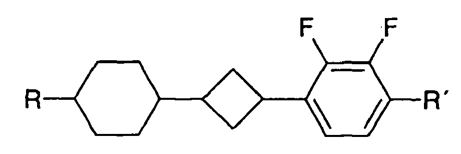 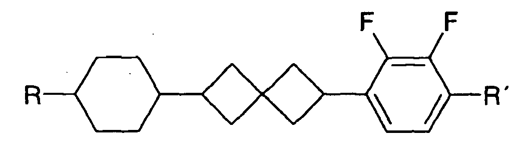 worin R und R' unabhängig ein Alkyl, Alkoxy, Alkenyl oder Alkenyloxy bedeuten. R' bedeutet vorzugsweise Alkoxy, insbesondere mit 1-5 C-Atomen, z. B. eine Methoxy- oder Ethoxygruppe. Der Rest R bedeutet beispielsweise eine Ethyl-, n-Propyl- oder n-Butylgruppe.

Unter den Verbindungen der Formel IC sind besonders bevorzugt die Verbindungen der allgemeinen Formeln IC1 bis IC6:

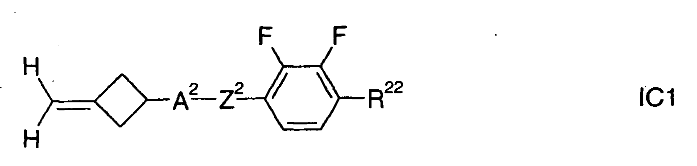

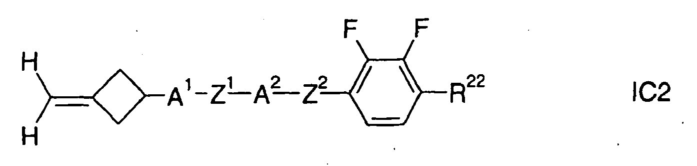

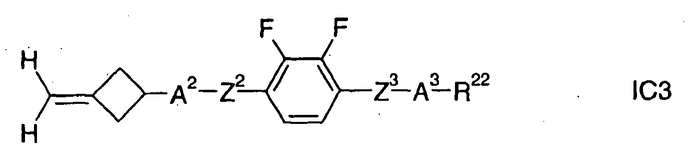

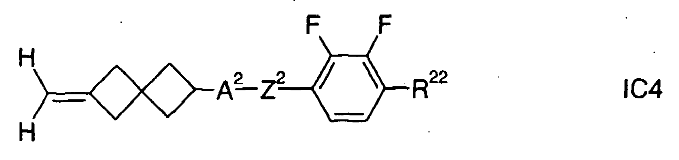

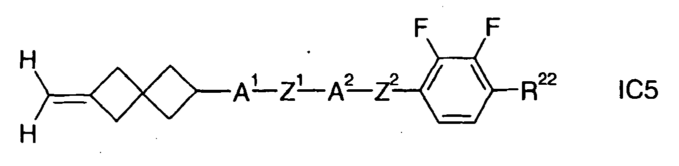

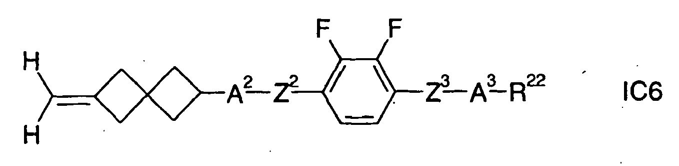

Darunter sind besonders bevorzugt die Verbindungen, in denen Z¹ und Z² eine Einfachbindung bedeuteten oder A¹, A² bevorzugt ein Ringsystem wie oben für Formel I definiert mit Ausnahme der Einfachbindung darstellt.

Beispielhafte Verbindungen der Formel IC sind die folgenden Verbindungen: 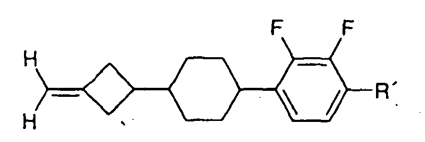 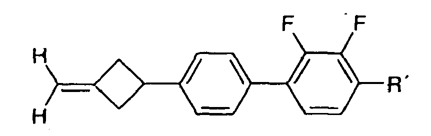 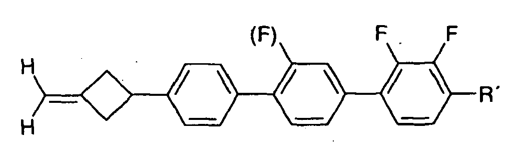 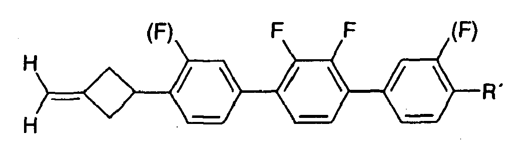 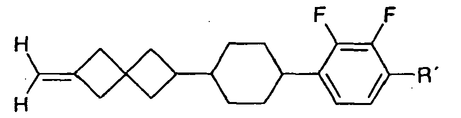 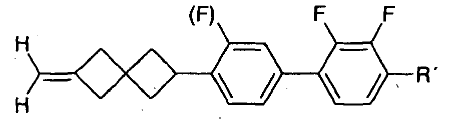 worin R' unabhängig ein Alkyl, Alkoxy, Alkenyl oder Alkenyloxy bedeutet. R' bedeutet beispielsweise Alkoxy, insbesondere mit 1-5 C-Atomen, z. B. eine Methoxy- oder Ethoxygruppe.

Die Verbindungen der allgemeinen Formel I werden nach an sich bekannten Methoden dargestellt, wie sie in der Literatur (z. B. in den Standardwerken wie Houben-Weyl, Methoden der organischen Chemie, Georg-Thieme-Verlag, Stuttgart) beschrieben sind, und zwar unter Reaktionsbedingungen, die für die genannten Umsetzungen bekannt und geeignet sind. Dabei kann man von an sich bekannten, hier nicht näher erwähnten Varianten Gebrauch machen. Die Ausgangsstoffe können gegebenenfalls auch *in situ* gebildet werden, also derart, dass man sie aus dem Reaktionsgemisch nicht isoliert, sondern sofort weiter zu den Verbindungen der allgemeinen Formel I umsetzt. Die Ausgangssubstanzen sind nach allgemein zugänglichen Literaturvorschriften oder käuflich zu erhalten.

Die erfindungsgemäßen Verbindungen der Formel I sind auch nach den folgenden Verfahren zugänglich.

Die in Schema 1 abgebildeten Reaktionsschritte eignen sich zum Aufbau eines Cyclobutanringes und davon ausgehend eines Spiro[3.3]heptanringsystems. Ausgehend von substituierten Alkenen (H₂C=CH-R) werden nacheinander ein oder zwei Cyclobutanringe aufgebaut, was zunächst zu den Zwischenstufen der Formeln A (Cyclobutanone) oder B (Spiro[3.3]heptanone) führt. Der Rest R steht für einen Molekülteil der Zielverbidungen oder für eine Vorstufe davon, allgemein für einen beliebigen organischen Molekülrest.

Eine Ausführungsform der Erfindung ist daher ein Verfahren zur Herstellung von Verbindungen der Formel I, das dadurch gekennzeichnet, dass in mindestens einem Verfahrensschritt ein endständiges Alken an der Doppelbindung unter Verwendung von Trichloracetylchlorid (= Trichloressigsäurechlorid) zu einer 2,2-Dichlorcyclobutan-1-on-3-yl-Verbindung umgesetzt wird. Bevorzugt erfolgt dieser Verfahrenschritt einmal, zur Herstellung eines Cyclobutanen der Formel I, oder zweimal, zur Herstellung von Spiroverbindungen der Formel II. Insbesondere erfolgt dieser Verfahrensschritt unter Verwendung von Zink. Die Menge der eingesetzten Reagenzien ist vorzugsweise mindestens stöchiometrisch, bevorzugt im 1,5 bis 3-fachen Überschuss. Vorzugsweise wird eine katalytische Menge eines Kupfersalzes, insbesondere Cu(II)acetat zugesetzt, um das Zink zu aktivieren.

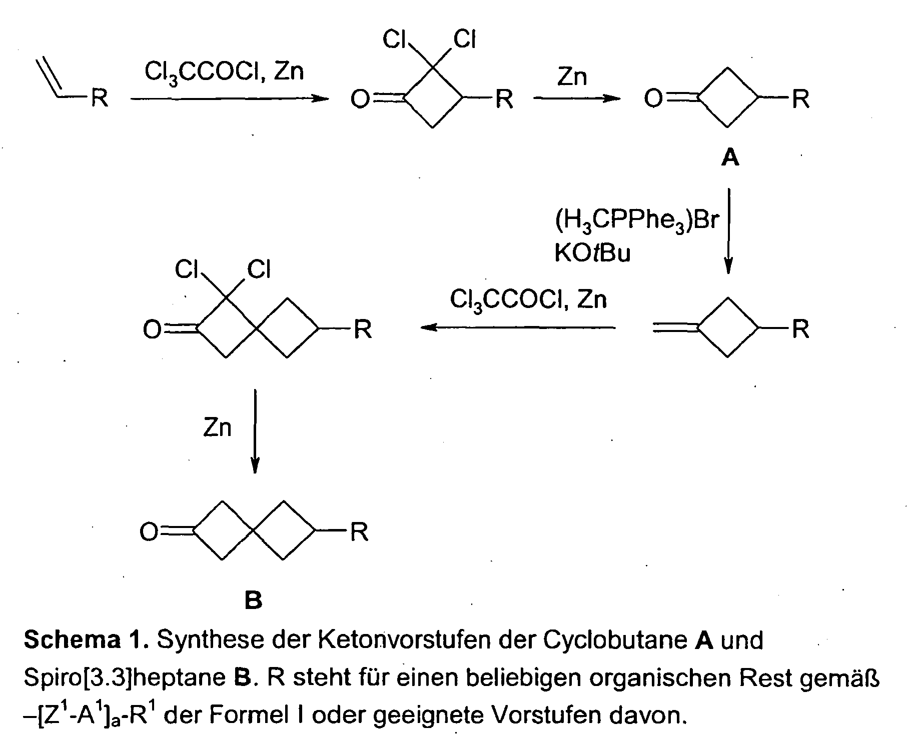

Die Cyclobutanketone A und B eignen sich hervorragend zur weiteren Derivatisierung an der Carbonylfunktion durch eine Wittig-Olefinisierung oder durch die Addition einer Metallverbindung an die Carbonylgruppe mit nachfolgender reduktiver Entfernung der entstehenden OH-Gruppe. Nach diesem Prinzip sind eine Vielfalt von erfindungsgemäßen Verbindungen zugänglich (Schema 2). Reduziert man die Carbonylfunktion vollständig, so erhält man erfindungsgemäße Verbindungen der allgemeinen Formel I, in denen einer der Ringe A¹⁻⁴ ein Cyclobutan oder ein Spiro[3.3]heptan bedeutet und die benachbarte Gruppe R¹ oder R² für Wasserstoff steht. Die vollständige Reduktion der Carbonylgruppe kann beispielsweise nach Clemmensen (Zn-Hg, HCl) oder nach Wolff-Kishner (Hydrazin-Hydrat, Base) erfolgen. 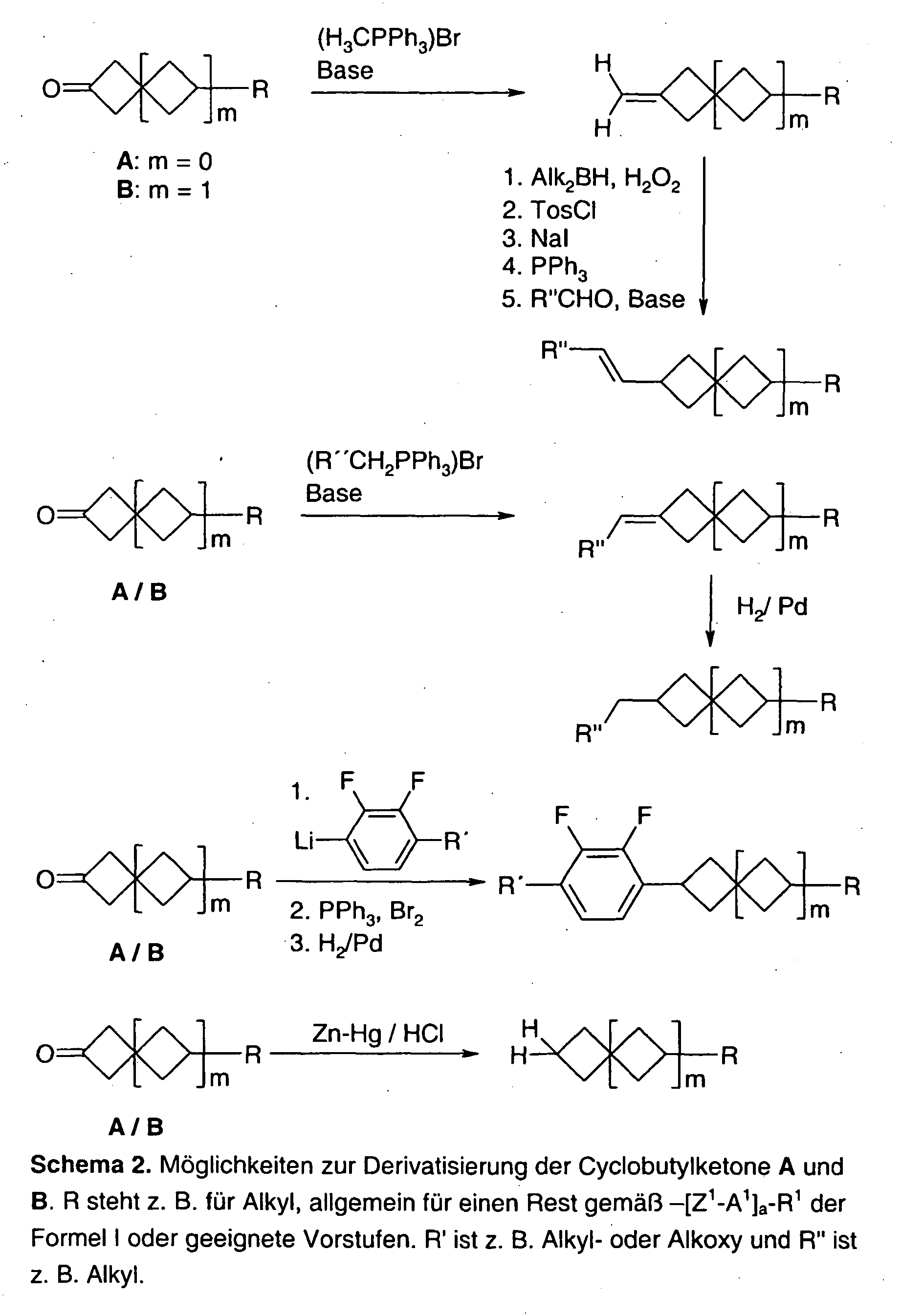 Die Synthese der Alkene, die als Edukte für die Cyclobutanbildung dienen, kann beispielsweise nach den in Schema 3a/3b dargestellten Reaktionen erfolgen. Die Wittig-Olefinisierung mit Methyltriphenylphosphoniumbromid (H₃C-PPh₃)Br eignet sich gut, um Carbonylgruppen in endständige Alkene umzuwandeln. Für die Darstellung der Carbonylgruppen an den benötigten Positionen stehen zahlreiche präparative Standardmethoden zur Verfügung.

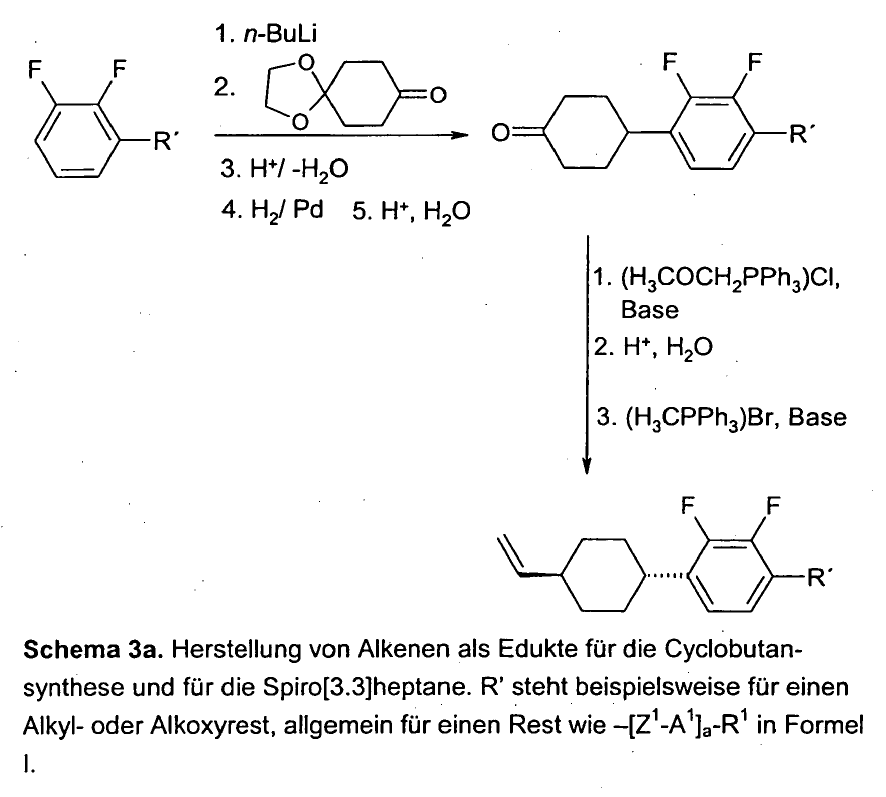

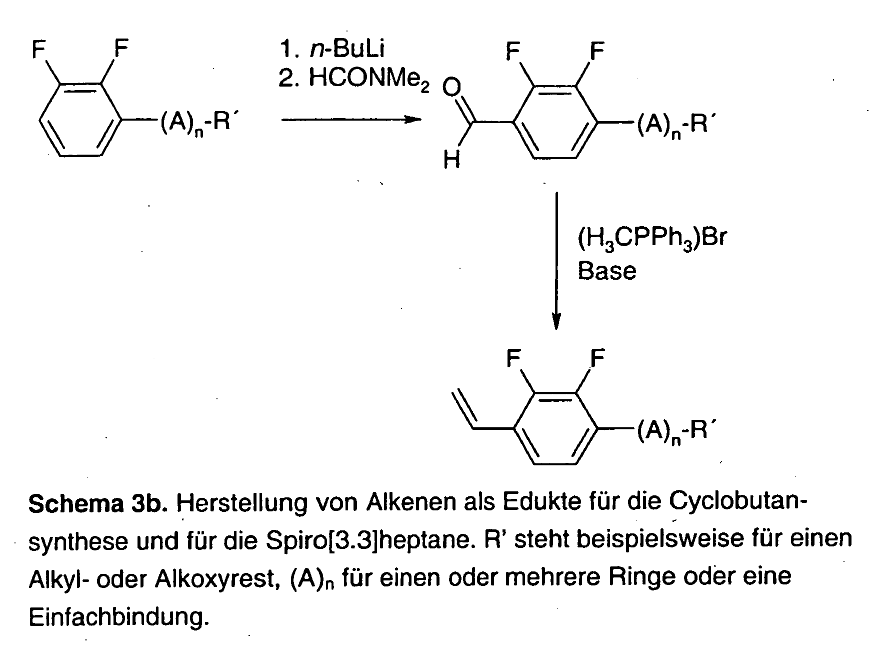

Die gemäß Schema 2 dargestellten Verbindungen sind häufig schon die gewünschten Endverbindungen im Sinne der Erfindung. Für einige der erfindungsgemäßen Verbindungen kann es jedoch von Vorteil sein, fehlende Molekülteile erst durch nachträgliche Derivatisierung einzuführen. In Schema 4 sind Synthesemethoden zur späteren Derivatisierung der Cyclobutan- und Spiro[3.3]heptanverbindungen skizziert.

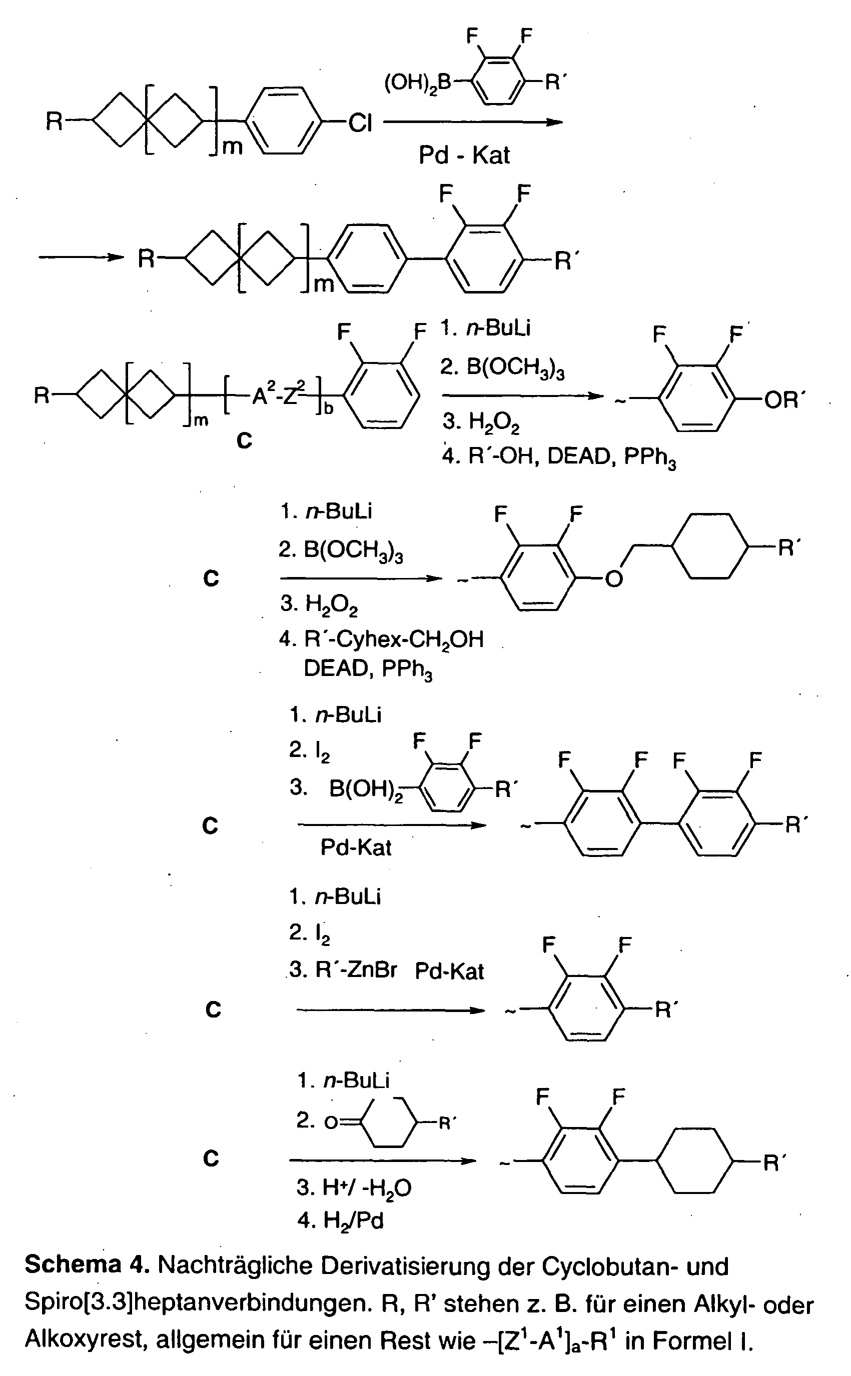

Umgekehrt ist es möglich, die Cyclobutan- und Spiro[3.3]heptangerüste erst im Zuge einer Derivatisierung eines (mesogenen) Grundkörpers einzuführen. Eine beispielhafte Synthese ist in Schema 5 skizziert.

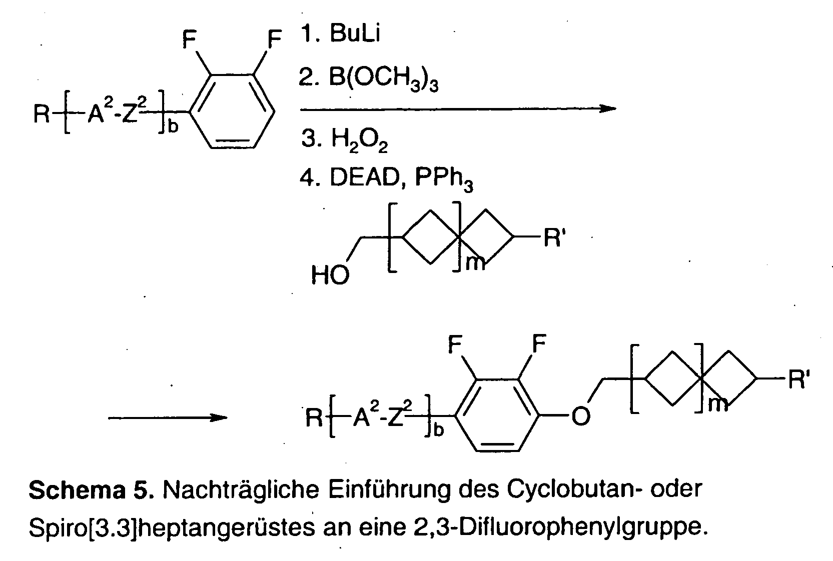

Durch die Kombination der dargestellten Synthesen lassen sich alle erfindungsgemäßen Verbindungen darstellen.

Modifikationen und Variationen der genannten Verfahren können vom Fachmann aufgrund seiner Kenntnisse ohne weiteres vorgenommen und durchgeführt werden. Das Studium der beigefügten Beispiele wird diese Verfahren weiter veranschaulichen.

Wie bereits erwähnt, können die Verbindungen der allgemeinen Formel I in flüssigkristallinen Medien verwendet werden.

Gegenstand der vorliegenden Erfindung ist daher auch ein flüssigkristallines Medium mit mindestens zwei flüssigkristallinen Verbindungen, enthaltend mindestens eine Verbindung der allgemeinen Formel I.

Gegenstand der vorliegenden Erfindung sind auch flüssigkristalline Medien enthaltend neben einer oder mehreren erfindungsgemäßen Verbindungen der Formel I als weitere Bestandteile 2 bis 40, vorzugsweise 4 bis 30 Komponenten. Besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, 1,3-Dioxane, 2,5-Tetrahydropyrane, Phenyl- oder Cyclohexylbenzoate, Cyclohexancarbonsäurephenyl-oder-cyclohexylester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexylcyclohexene, 1,4-Biscyclohexylbenzole, 4',4'-Biscyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane; 1,2-Diphenylethane, 1,2-Dicyclohexylethane, 1-Phenyl-2-cyclohexylethane, 1-Cyclohexyl-2-(4-phenylcyclohexyl)ethane, 1-Cyclohexyl-2-biphenylethane, 1-Phenyl-2-cyclohexylphenylethane, gegebenenfalls halogenierten Stilbene, Benzylphenylether, Tolane und substituierten Zimtsäuren. Die 1,4-Phenylengruppen in diesen Verbindungen können auch einfach oder mehrfach fluoriert sein.

Die wichtigsten als weitere Bestandteile erfindungsgemäßer Medien in Frage kommenden Verbindungen lassen sich durch die Formeln (1), (2), (3), (4) und (5) charakterisieren:

R'-L-E-R" (1)

R'-L-COO-E-R" (2)

R'-L-OOC-E-R" (3)

R'-L-CH₂CH₂-E-R" (4)

R'-L-CF₂O-E-R" (5)

In den Formeln (1), (2), (3), (4) und (5) bedeuten L und E, die gleich oder verschieden sein können, jeweils unabhängig voneinander einen bivalenten Rest, ausgewählt aus der Gruppe gebildet aus -Phe-, -Cyc-, -Phe-Phe-, -Phe-Cyc-, -Cyc-Cyc-, -Pyr-, -Dio-, -Thp-, -G-Phe- und -G-Cycsowie deren Spiegelbildern, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl, Thp Tetrahydropyran-2,5-diyl und G 2-(trans-1,4-Cyclohexyl)-ethyl, Pyrimidin-2,5-diyl, Pyridin-2,5-diyl, 1,3-Dioxan-2,5-diyl oder Tetrahydropyran-2,5-diyl bedeuten.

Vorzugsweise ist einer der Reste L und E Cyc oder Phe. E ist vorzugsweise Cyc, Phe oder Phe-Cyc. Vorzugsweise enthalten die erfindungsgemäßen Medien eine oder mehrere Komponenten ausgewählt aus den Verbindungen der Formeln (1), (2), (3), (4) und (5), worin L und E ausgewählt sind aus der Gruppe Cyc und Phe und gleichzeitig eine oder mehrere Komponenten ausgewählt aus den Verbindungen der Formeln (1), (2), (3), (4) und (5), worin einer der Reste L und E ausgewählt ist aus der Gruppe Cyc und Phe und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln (1), (2), (3), (4) und (5), worin die Reste L und E ausgewählt sind aus der Gruppe -Phe-Cyc-, -Cyc-Cyc-, -G-Phe- und -G-Cyc-.

R' und R" bedeuten in einer kleineren Untergruppe der Verbindungen der Formeln (1), (2), (3), (4) und (5) jeweils unabhängig voneinander Alkyl, Alkenyl, Alkoxy, Alkoxyalkyl (Oxaalkyl), Alkenyloxy oder Alkanoyloxy mit bis zu 8 C-Atomen. Im folgenden wird diese kleinere Untergruppe Gruppe A genannt und die Verbindungen werden mit den Teilformeln (1a), (2a), (3a), (4a) und (5a) bezeichnet. Bei den meisten dieser Verbindungen sind R' und R" voneinander verschieden, wobei einer dieser Reste meist Alkyl, Alkenyl, Alkoxy oder Alkoxyalkyl (Oxaalkyl) ist.

In einer anderen als Gruppe B bezeichneten kleineren Untergruppe der Verbindungen der Formeln (1), (2), (3), (4) und (5) bedeutet E

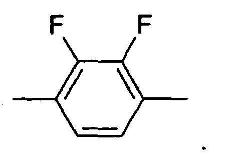

In den Verbindungen der Gruppe B, die mit den Teilformeln (1b), (2b), (3b), (4b) und (5b) bezeichnet werden, haben R' und R" die bei den Verbindungen der Teilformeln (1a) bis (5a) angegebene Bedeutung und sind vorzugsweise Alkyl, Alkenyl, Alkoxy oder Alkoxyalkyl (Oxaalkyl).

In einer weiteren kleineren Untergruppe der Verbindungen der Formeln (1), (2), (3), (4) und (5) bedeutet R" -CN. Diese Untergruppe wird im folgenden als Gruppe C bezeichnet und die Verbindungen dieser Untergruppe werden entsprechend mit Teilformeln (1c), (2c), (3c), (4c) und (5c) beschrieben. In den Verbindungen der Teilformeln (1 c), (2c), (3c), (4c) und (5c) hat R' die bei den Verbindungen der Teilformeln (1a) bis (5a) angegebene Bedeutung und ist vorzugsweise Alkyl, Alkenyl, Alkoxy oder Alkoxyalkyl (Oxaalkyl).

Neben den bevorzugten Verbindungen der Gruppen A, B und C sind auch andere Verbindungen der Formeln (1), (2), (3), (4) und (5) mit anderen Varianten der vorgesehenen Substituenten gebräuchlich. All diese Substanzen sind nach literaturbekannten Methoden oder in Analogie dazu erhältlich.

Die erfindungsgemäßen Medien enthalten neben den erfindungsgemäßen Verbindungen der allgemeinen Formel I vorzugsweise eine oder mehrere Verbindungen aus den Gruppen A, B und/oder C. Die Massenanteile der Verbindungen aus diesen Gruppen an den erfindungsgemäßen Medien betragen:
Gruppe A: 0 bis 90%, vorzugsweise 20 bis 90%, insbesondere 30 bis 90%
Gruppe B: 0 bis 80%, vorzugsweise 10 bis 80%, insbesondere 10 bis 70%
Gruppe C: 0 bis 80%, vorzugsweise 5 bis 80%, insbesondere 5 bis 50%.

Die erfindungsgemäßen Medien enthalten vorzugsweise 1 bis 40%, besonders bevorzugt 5 bis 30% an den erfindungsgemäßen Verbindungen der Formel I. Weiterhin bevorzugt sind Medien, enthaltend mehr als 40%, insbesondere 45 bis 90% an erfindungsgemäßen Verbindungen der Formel I. Die Medien enthalten vorzugsweise eine, zwei, drei, vier oder fünf erfindungsgemäße Verbindungen der Formel I.

Beispiele für die Verbindungen der Formeln (1), (2), (3), (4) und (5) sind die nachstehend aufgeführten Verbindungen: 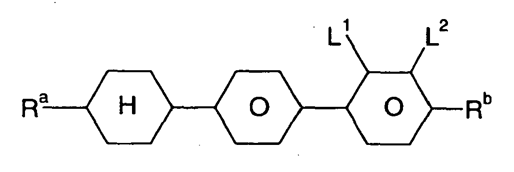 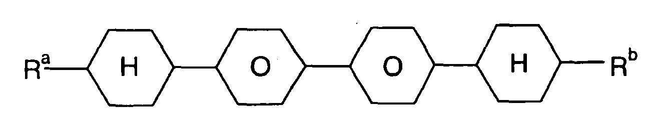 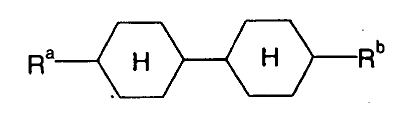 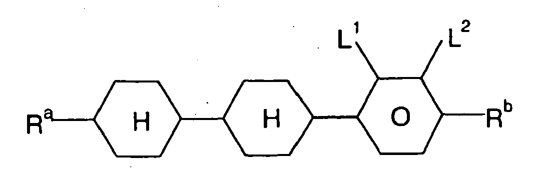 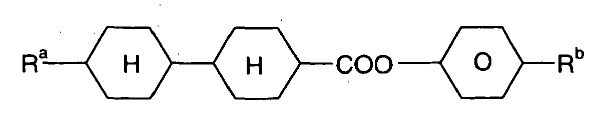 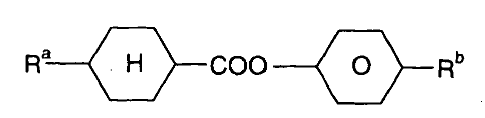 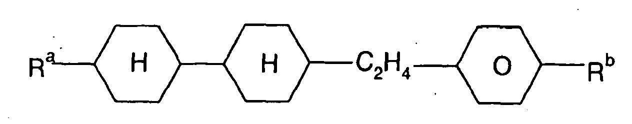 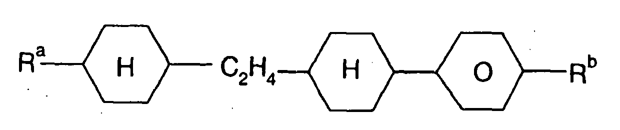 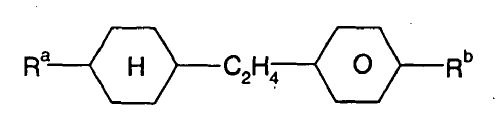 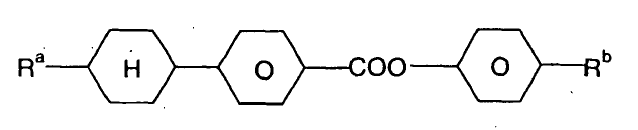 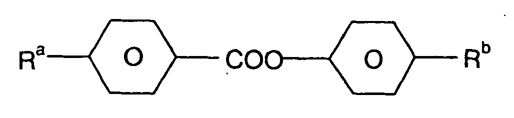 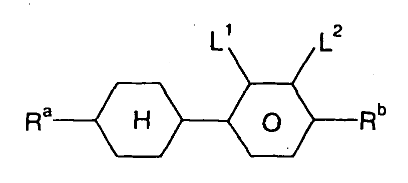 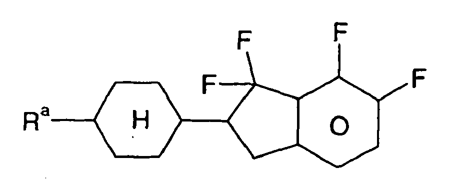 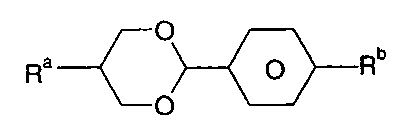 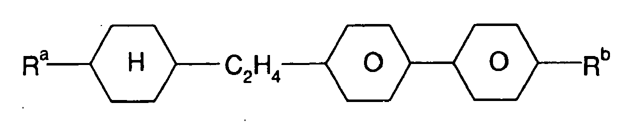 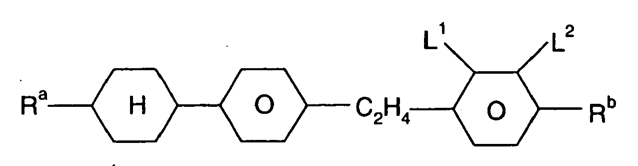 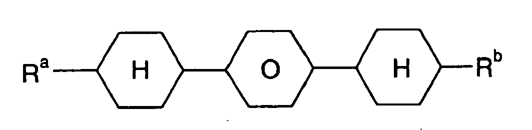 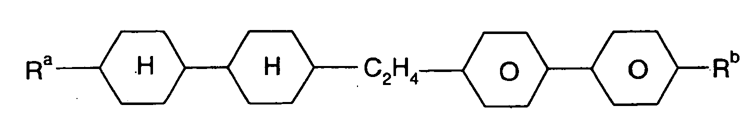 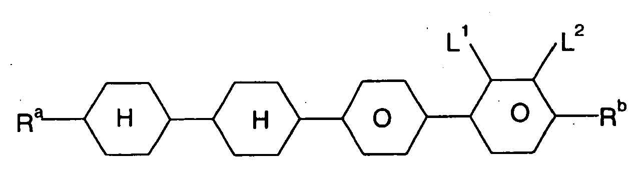 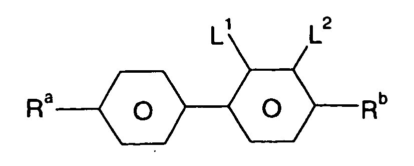 mit R^{a}, R^{b} unabhängig voneinander -CₚH₂ₚ₊₁ oder -OCₚH₂ₚ₊₁ und p = 1, 2, 3, 4, 5, 6, 7 oder 8 sowie L¹, L² unabhängig voneinander -H oder -F, 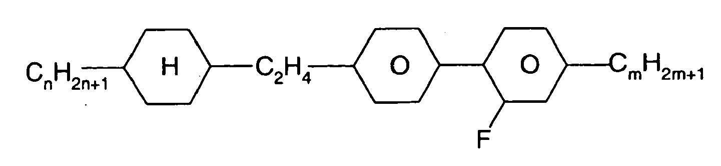 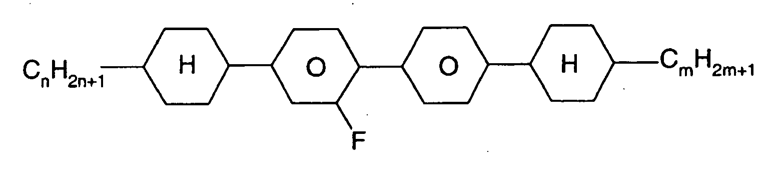 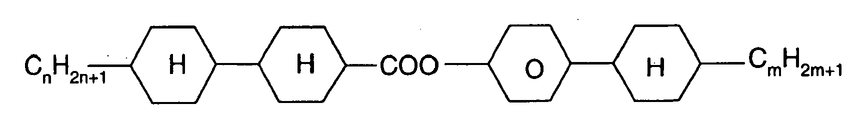 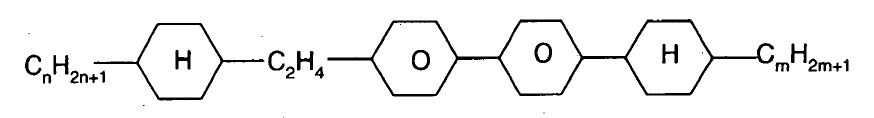 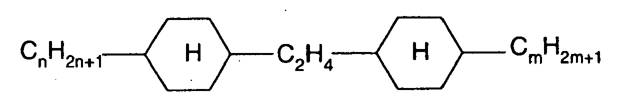 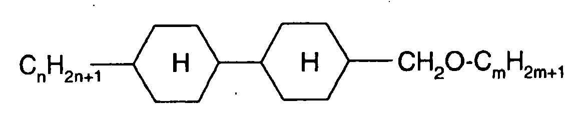 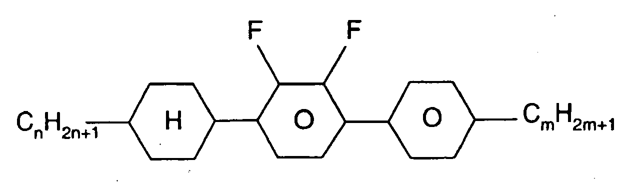 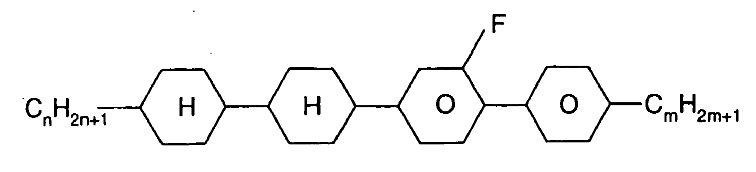 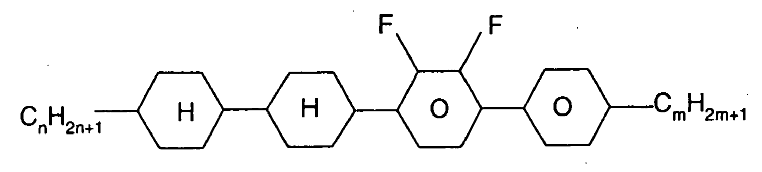 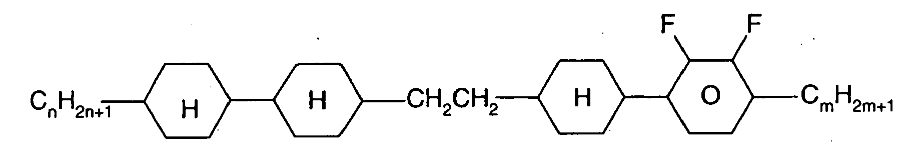 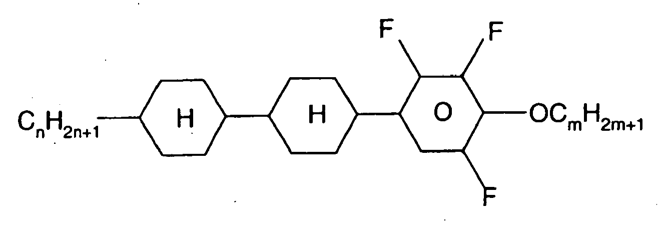 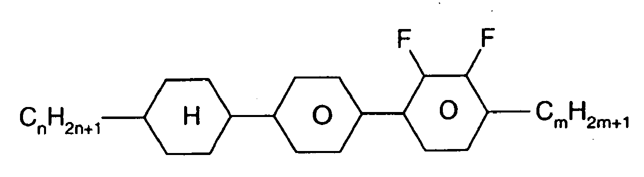 mit m, n in diesen Formeln unabhängig voneinander 1, 2, 3, 4, 5, 6, 7 oder 8.

Die Herstellung der erfindungsgemäßen Medien erfolgt in an sich üblicher Weise. In der Regel werden die Komponenten ineinander gelöst, vorzugsweise bei erhöhter Temperatur. Durch geeignete Zusätze können die flüssigkristallinen Phasen der vorliegenden Erfindung so modifiziert werden, dass sie in allen bisher bekannt gewordenen Arten von Flüssigkristallanzeigeelementen verwendet werden können. Derartige Zusätze sind dem Fachmann bekannt und in der Literatur ausführlich beschrieben (H. Kelker/R. Hatz, Handbook of Liquid Crystals, Verlag Chemie, Weinheim, 1980). Beispielsweise können pleochroitische Farbstoffe zur Herstellung farbiger Guest-Host-Systeme oder Substanzen zur Veränderung der dielektrischen Anisotropie, der Viskosität und/oder der Orientierung der nematischen Phasen zugesetzt werden.

Die Verbindungen der Formel I eignen sich wegen ihres negativen Δε insbesondere für eine Verwendung in VA-TFT-Displays.

Gegenstand der vorliegenden Erfindung sind daher auch elektrooptische Flüssigkristallanzeigeelemente, enthaltend ein erfindungsgemäßes flüssigkristallines Medium.

Weitere Kombinationen der Ausführungsformen und Varianten der Erfindung ergeben sich aus den Ansprüchen.

Die Erfindung wird im Beispielteil anhand von Ausführungsbeispielen näher erläutert, ohne dadurch jedoch eingeschränkt werden zu sollen.

Vor- und nachstehend bedeutet Δn die optische Anisotropie (589 nm, 20°C) und Δε die dielektrische Anisotropie (1 kHz, 20°C).

Halogen bedeutet im Zusammenhang der vorliegenden Erfindung Fluor, Chlor, Brom und Iod.

Im Zusammenhang mit der vorliegenden Erfindung bedeutet der Ausdruck "Alkyl" - sofern er nicht an anderer Stelle dieser Beschreibung oder in den Ansprüchen abweichend definiert ist - in seiner allgemeinsten Bedeutung einen geradkettigen oder verzweigten, gesättigten oder ungesättigten aliphatischen Kohlenwasserstoffrest mit 1 bis 15 (d.h. 1, 2, 3, 4, 5, 6, 7, 8, 9, 10, 11, 12, 13, 14 oder 15) Kohlenstoffatomen; dieser Rest ist unsubstituiert oder einfach oder mehrfach mit Fluor, Chlor, Brom, Iod, Carboxy, Nitro, -NH₂, -N(Alkanyl)₂ und/oder Cyano substituiert, wobei die Mehrfachsubstitution mit dem gleichen oder mit verschiedenen Substituenten erfolgen kann. Auch kann der Alkylrest in der aliphatischen Kohlenwasserstoffkette selbst funktionalisiert sein.

Sofern es sich bei diesem Alkylrest um einen gesättigten Rest handelt, wird er auch als "Alkanyl" bezeichnet. Ferner umfasst der Ausdruck "Alkyl" auch unsubstituierte oder entsprechend mit F ein- oder mehrfach gleich oder verschieden substituierte Kohlenwasserstoffreste, in denen eine oder mehrere CH₂-Gruppen derart durch -O- ("Alkoxy", "Oxaalkyl"), -S-("Thioalkyl"), -SO₂-, -CH=CH- ("Alkenyl"), C≡C- ("Alkinyl"), -CO-, -CO-O-oder -O-CO- ersetzt sein können, dass Heteroatome (O, S) in der Kette nicht direkt miteinander verknüpft sind. Vorzugsweise ist Alkyl ein geradkettiger oder verzweigter, unsubstituierter oder substituierter Alkanyl-, Alkenyl- oder Alkoxyrest mit 1, 2, 3, 4, 5, 6, 7 oder 8 Kohlenstoffatomen. Sofern Alkyl einen Alkanylrest bedeutet, ist dieser bevorzugt Methyl, Ethyl, n-Propyl, i-Propyl, n-Butyl, i-Butyl, t-Butyl, n-Pentyl, Neopentyl, n-Hexyl, n-Heptyl oder n-Octyl.
Da in einem Alkylrest eine oder mehrere CH₂-Gruppen durch -O- ersetzt sein können, umfasst der Ausdruck "Alkyl" auch "Alkoxy"-beziehungsweise "Oxaalkyl"-Reste. Unter Alkoxy ist ein O-Alkyl-Rest zu verstehen, in dem das Sauerstoffatom direkt mit der durch den Alkoxyrest substituierten Gruppe oder dem substituierten Ring verbunden ist und Alkyl wie oben definiert ist; vorzugsweise ist Alkyl dann Alkanyl oder Alkenyl. Bevorzugte Alkoxyreste sind Methoxy, Ethoxy, Propoxy, Butoxy, Pentoxy, Hexoxy, Heptoxy und Octoxy, wobei jeder dieser Reste auch substituiert sein kann, und zwar vorzugsweise mit einem oder mehreren Fluoratomen. Besonders bevorzugt ist Alkoxy -OCH₃, -OC₂H₅, -O-n-C₃H₇ oder -O-n-C₄H₉. Im Zusammenhang mit der vorliegenden Erfindung bedeutet der Ausdruck "Oxaalkyl" Alkylreste, in denen wenigstens eine nicht-terminale CH₂-Gruppe durch -O- derart ersetzt ist, dass keine benachbarten Heteroatome (O, S) vorliegen. Vorzugsweise umfasst Oxaalkyl geradkettige Reste der Formel CₐH₂ₐ₊₁-O-(CH₂)_{b}-, wobei a und b jeweils unabhängig voneinander 1, 2, 3, 4, 5, 6, 7, 8, 9 oder 10 bedeuten; besonders bevorzugt ist a eine ganze Zahl von 1 bis 6 und b 1 oder 2.

Falls der Alkylrest, Alkanylrest, Alkenylrest beziehungsweise Alkoxyrest mit mindestens einem Halogen substituiert ist, so ist dieser Rest vorzugsweise geradkettig. Halogen ist vorzugsweise F. Die resultierenden Reste schließen auch perfluorierte Reste ein. Bei Einfachsubstitution kann der Fluorsubstituent in beliebiger Position sein, vorzugsweise jedoch in ω-Position.

Sofern Reste oder Substituenten der erfindungsgemäßen Verbindungen beziehungsweise die erfindungsgemäßen Verbindungen selbst als optisch aktive oder stereoisomere Reste, Substituenten beziehungsweise Verbindungen vorliegen, weil sie beispielsweise ein asymmetrisches Zentrum aufweisen, so sind diese von der vorliegenden Erfindung mit umfasst. Dabei ist es selbstverständlich, dass die erfindungsgemäßen Verbindungen der allgemeinen Formel I in isomerenreiner Form, zum Beispiel als reine Enantiomeren, Diastereomeren, E- beziehungsweise Z-Isomeren, trans- beziehungsweise cis-Isomeren, oder als Gemisch mehrerer Isomeren in jedem beliebigen Verhältnis, zum Beispiel als Racemat, E-/Z-Isomerengemisch oder als cis/trans-Isomerengemisch, vorliegen können.

Zum Schutz von gegebenenfalls im Molekül enthaltenen, gegebenenfalls reaktiven funktionellen Gruppen beziehungsweise Substituenten vor unerwünschten Reaktionen bei der erfindungsgemäßen Reaktion und/oder vorausgehenden oder nachfolgenden Reaktions- und/oder Aufarbeitungsschritten können Schutzgruppen eingesetzt werden, die nach erfolgter Reaktion wieder abgespalten werden können. Methoden zur Verwendung von geeigneten Schutzgruppen sind dem Fachmann bekannt und zum Beispiel in T.W. Green, P.G.M. Wuts: Protective Groups in Organic Synthesis, 3rd Ed., John Wiley & Sons (1999), beschrieben.

Vor- und nachstehend werden folgende Abkürzungen verwendet:

| | |
|---|---|
| RT | Raumtemperatur |
| THF | Tetrahydrofuran |
| MTB-Ether | Methyl-*tert*-butylether |
| BuLi | *n*-Buthyllithium |
| DEAD | Diisopropylazodicarboxylat |
| Klp. | Klärpunkt |

### Beispiele

Die Ausgangssubstanzen können nach allgemein zugänglichen Literaturvorschriften oder käuflich erhalten werden. Die beschriebenen Reaktionstypen sind prinzipiell literaturbekannt. Neben den üblichen und wohlbekannten Abkürzungen werden folgende Abkürzungen verwendet: K: Kristalline Phase; N: Nematische Phase; I: Isotrope Phase. Temperaturangaben sind, soweit nichts anderes angegeben, in Celsiusgraden (°C).

Die Bestimmung physikalischer, physikochemischer beziehungsweise elektrooptischer Parameter erfolgt nach allgemein bekannten Verfahren, wie sie unter anderem beschrieben sind in der Broschüre "Merck Liquid Crystals - Licristal® - Physical Properties of Liquid Crystals - Description of the Measurements Methods", 1998, Merck KGaA, Darmstadt.

Die dielektrische Anisotropie Δε der einzelnen Substanzen wird bei 20 °C und 1 kHz bestimmt. Dazu werden 10 Gew.% der zu untersuchenden Substanz in der dielektrisch negativen Mischung ZLI-2857 (Merck KGaA) gelöst gemessen und der Messwert auf eine Konzentration von 100 % extrapoliert. Die optische Anisotropie Δn wird bei 20°C und einer Wellenlänge von 589,3 nm bestimmt. Sie wird, wie die übrigen Messwerte, in der dielektrisch positiven Mischung ZLI-4792 (Merck KGaA) ebenfalls durch Extrapolation der Werte bei 10 Gew.% bestimmt.

### Beispiel 1.1

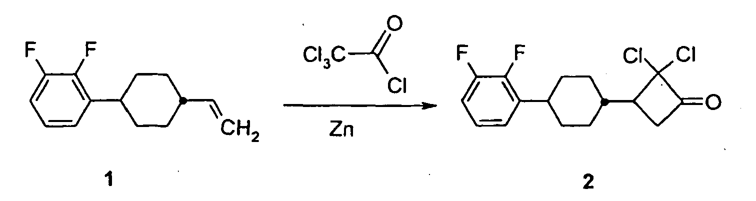

Zu einer Lösung des Alkens (1) (79,0 g; 0,35 mmol) in 0,75 I Diethylether werden Zinkpulver (40 g; 0,61 mmol) und Kupfer(II)acetat-Monohydrat (2,50 g; 12,5 mmol) gegeben. Dazu tropft man in 30 min 60 ml Trichloracetylchlorid (0,53 mmol) und rührt weiter bis zum Einsetzen der exothermen Reaktion. Nach 8 h Rühren wird über Celite® filtriert und die Lösung mit Wasser und gesättigter NaCl-Lösung gewaschen, über Na₂SO₄ getrocknet und im Vakuum eingeengt. Der braune Rückstand wird mit 1-Chlorbutan über eine Lage Kieselgel gereinigt. Gelbes Öl (2).

### Beispiel 1.2

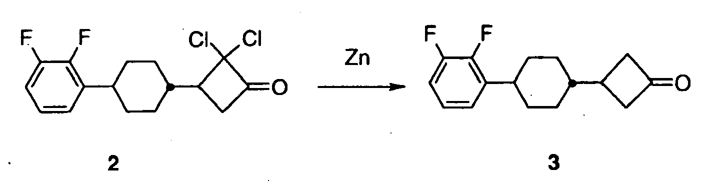

Zu 111 g (0,308 mol) des Cyclobutanons (2) in 1 l Eisessig wird unter Rühren Zinkstaub (100 g; 1,53 mol) gegeben. Nach der exothermen Reaktion rührt man 12 h bei 70 °C. Der Ansatz wird mit Wasser und MTB-Ether versetzt, über Celite® filtriert und mit MTB-Ether nachgewaschen. Die wässrige Phase wird zweimal mit MTB-Ether gewaschen. Die vereinigten organischen Phasen werden mit Wasser, zweimal mit gesättigter NaHCO₃-Lösung und mit gesättigter NaCl-Lösung gewaschen und über Na₂SO₄ getrocknet.

### Beispiel 1.3

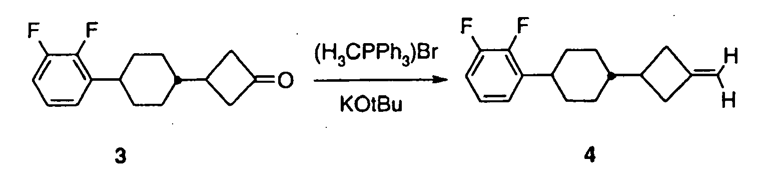

Das Cyclobutanon (3) (63,0 g; 237 mmol) und Methyltriphenylphosphoniumbromid werden in 500 ml THF suspendiert und bei 10-20 °C portionsweise mit Kalium-tert-butylat (30,0 g; 267 mmol) versetzt. Es wird 12 h bei RT gerührt, mit Wasser versetzt, mit halbkonzentrierter HCl angesäuert und dreimal mit MTB-Ether extrahiert. Die organischen Phase wird mit Wasser und gesättigter NaCl-Lösung gewaschen, über Na₂SO₄ getrocknet und im Vakuum eingeengt. Die Reinigung erfolgt über Kieselgel. Klare Flüssigkeit (4).

### Beispiel 1.4

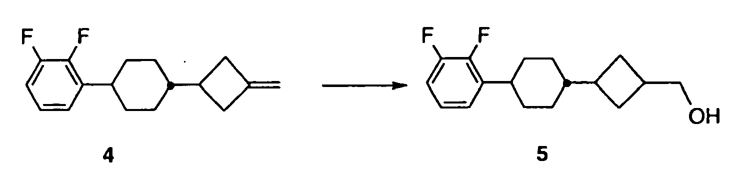

2,3-Dimethyl-2-buten (8,70 ml; 73,3 mol) wird in 50 ml Dichlormethan gelöst, auf 0 °C abgekühlt und bei dieser Temperatur mit Boran-Dimethylsulfid-Komplex (1 N in CH₂Cl₂) (36,0 ml; 36,0 mmol) versetzt. Dazu wird das Alken (4) (8,00 g; 30,1 mmol) in 50 ml Dichlormethan bei 0 °C zugetropft und weitere 12 h bei RT gerührt. Anschließend werden nacheinander 1 N Natronlauge (170 ml; 170 mmol) und Wasserstoffperoxid 35 % (17,0 ml; 174 mmol) zugetropft. Die Suspension wird 2 h bei RT gerührt. Es werden Wasser und Dichlormethan zugegeben und die Phasen getrennt. Die wässrige Phase wird zweimal mit Methylenchlorid ausgeschüttelt und die vereinigten organischen Phasen zweimal mit Wasser und zweimal mit Ammoniumeisen(II)sulfat gewaschen, über Na₂SO₄ getrocknet und im Vakuum eingeengt. Das klare Öl wird mit MTB-Ether über Kieselgel gereinigt. Farblose Kristalle (5).

### Beispiel 1.5

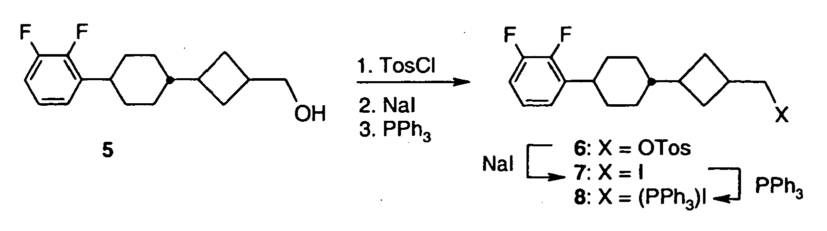

Zu dem Carbinol (5) (11,0 g; 39,2 mmol), 6,5 ml Pyridin (79,2 mmol) und 4-(Dimethylamino)pyridin (5,00 g; 40,9 mmol) in 120 ml Dichlormethan wird bei ca. 5 °C Toluol-4-sulfonylchlorid (9,00 g; 47,2 mmol) in 30 ml Dichlormethan getropft. Nach 12 h Rühren bei RT wird Wasser zugesetzt, mit HCl angesäuert und die Phasen getrennt. Es wird dreimal mit Dichlormethan ausgeschüttelt. Die organischen Phasen werden mit Wasser gewaschen, über Na₂SO₄ getrocknet und im Vakuum eingeengt. Das gelbe Öl wird mit 1-Chlorbutan und Dichlormethan an Kieselgel gereinigt. Farblose Kristalle (6).

Der Tosylester (6) (14,5 g 32,0 mmol), Natriumiodid (10,0 g; 66,7 mmol) und 200 ml Aceton werden unter Rühren 12 h am Rückfluss gehalten. Der Ansatz wird mit Wasser, MTB-Ether und 5 ml gesättigter NaHSO₃-Lösung versetzt. Die wässrige Phase wird abgetrennt und mit MTB-Ether ausgeschüttelt. Die organischen Phasen werden mit Wasser und gesättigter NaCl-Lösung gewaschen, über Na₂SO₄ getrocknet und im Vakuum eingeengt. Die Reinigung erfolgt mit Heptan an Kieselgel. Farblose Kristalle (7).

Das Iodid (7) (10,2 g; 25,9 mmol) und Triphenylphosphin (8,00 g; 30,5 mmol) werden in 200 ml Butyronitril 12 h auf 120 °C erhitzt. Die Lösung wird eingeengt und aus MTB-Ether umkristallisiert. Gelbliche Kristalle (8).

### Beispiel 1.6

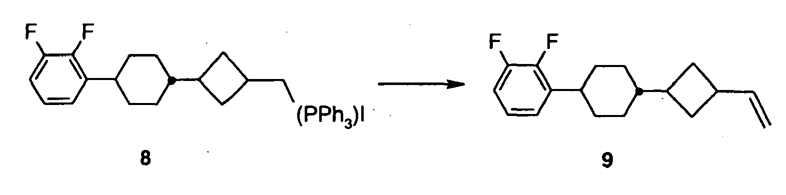

Zu dem Triphenylphosphoniumsalz (8) (14,9 g; 22,8 mmol) in 50 ml THF wird bei 0 °C Kalium-tert-butylat (3,20 g; 28,5 mmol) ca. 25 ml THF getropft. Nach 15 min wird bei 0 °C Paraformaldehyd (0,90 g; 28,4 mmol) zugegeben. Bei RT wird 1 h gerührt. Das Gemisch wird mit Wasser versetzt, mit halbkonzentrierter HCl angesäuert und mit MTB-Ether dreimal extrahiert. Die organischen Phasen werden mit Wasser und gesättigter NaCl-Lösung gewaschen und über Na₂SO₄ getrocknet. Das Filtrat wird im Vakuum eingeengt und mit Heptan an Kieselgel gereinigt. Gelbliche Kristalle (9)

### Beispiel 1.7

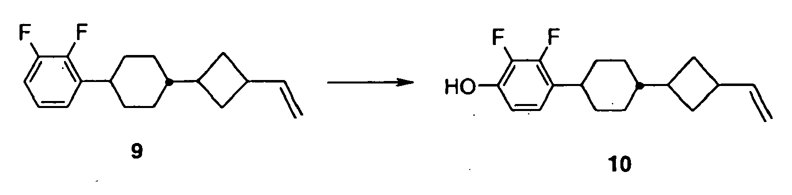

Die Difluorbenzolverbindung (9) (3,30 g; 11,8 mmol) wird in 40 ml trockenem THF gelöst und auf -70 °C gekühlt. Bei dieser Temperatur wird n-BuLi (15 % in Hexan; 8,0 ml; 13 mmol) zugetropft und 30 min gerührt. Bei -70 °C wird langsam eine Lösung von Trimethylborat (1,50 ml;13,4 mmol) in 10 ml THF zugegeben, weitere 30 min gerührt und langsam auf -15 °C erwärmt. Dazu wird eine Mischung aus Eisessig (1,0 ml; 17 mmol) und Wasser (3,00 ml; 0,167 mol) zugetropft, wobei die Temperatur auf 0 °C ansteigt. Man erwärmt auf 30 °C und tropft langsam Wasserstoffperoxid 35 % (3,00 ml; 34,8 mmol) so zu, dass die Temperatur 40 °C nicht übersteigt. Nach 1 h bei 40 °C wird für 17 h bei RT gerührt. Der Ansatz wird mit Wasser und MTB-Ether in Gleichgewicht gebracht, getrennt und nochmal mit MTB-Ether extrahiert. Die Extrakte werden mit Wasser, dreimal mit Ammoniumeisen(II)-sulfatlösung und mit gesättigter NaCl-Lösung gewaschen. Der eingeengte Rückstand wird mit Dichlormethan über Kieselgel gereinigt. Farblose Kristalle (10).

### Beispiel 1.8

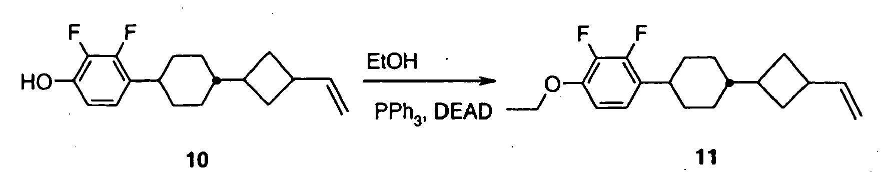

Zu einer Lösung des Phenols (10) (2,20 g; 7,52 mmol), Triphenylphosphin (2,30 g; 8,76 mmol) und Ethanol (0,50 ml; 8,57 mmol) in 50 ml TH F tropft man bei RT Diisopropylazodicarboxylat (1,70 ml; 8,74 mmol). Man rührt 12 h, befreit im Vakuum vom Lösemittel und reinigt an Kieselgel und durch Umkristallisation aus Methanol. Schmp. 59 °C.
K 53 N (30) I; Klp. 28 °C; Δε -5,8; Δn 0,086; γ₁ 165 mPa·s.

### Beispiel 1.9

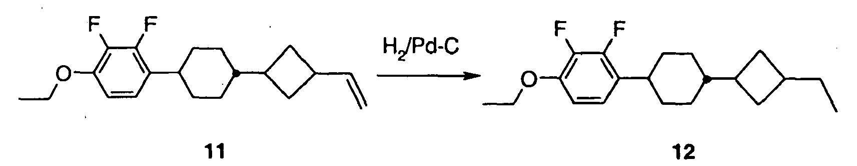

Das Alken (11) (580 mg; 1,81 mmol) wird zusammen mit Palladium auf Kohle (5 %; 0,60 g) in 10 ml THF 22 h bei RT unter einer Wasserstoffatmosphäre hydriert. Das Reaktionsgemisch wird filtriert, im Vakuum eingeengt, mit 1-Chlorbutan über Kieselgel filtriert und aus Methanol umkristallisiert. Schmp. 56 °C.
K 56 N (31) I; Klp. 28 °C; Δε -5,5; Δn 0,068; γ₁ 167 mPa·s.

### Beispiel 2.1

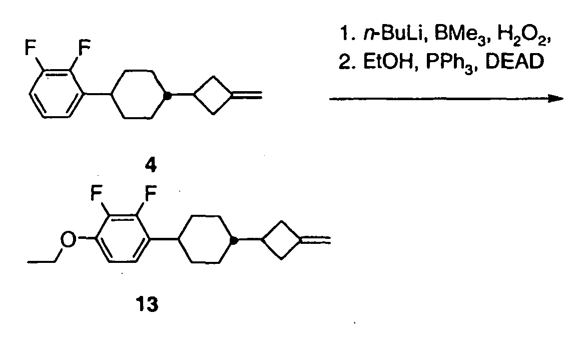

Aus dem Difluorbenzol (4) (14,3 g; 51,9 mmol) stellt man analog Beispiel 1.7 durch Einführen der OH-Gruppe und analog Beispiel 1.8 durch Verethern mit Ethanol, PPh₃ und DEAD die Ethyletherverbindung (13) her. Das gelbe Öl wird chromatographisch gereinigt. Farblose Kristalle (13). Schmp. 62 °C.
K 62 N (21) l; Klp. 10 °C; Δε -6,0; Δn 0,095; γ₁ 144 mPa·s.

### Beispiel 2.2

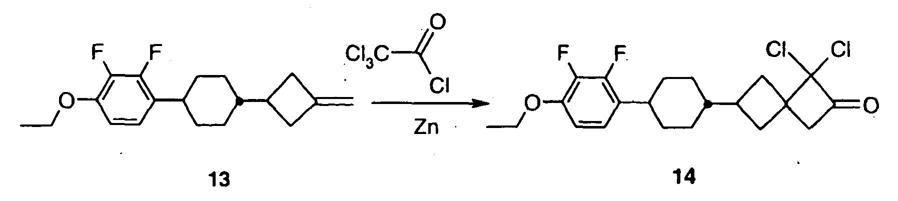

Das Cyclobutylen (13) (10,4 g; 33,9 mmol) wird in 100 ml Diethylether mit Zinkpulver (4,50 g; 68,8 mmol) und Kupfer(II)acetat (0,40 g; 2,00 mmol) gemischt. Dazu werden unter Rühren Trichloracetylchlorid (7,70 ml; 68,6 mmol) getropft. Nach Abklingen der exothermen Reaktion unter Rückfluss rührt man für 12 h bei RT. Die Aufarbeitung erfolgt wie für Beispiel 1.1. Zur Reinigung wird das rot-schwarze Öl mit Dichlormethan über Kieselgel geleitet. Gelbes Öl (14).

### Beispiel 2.3

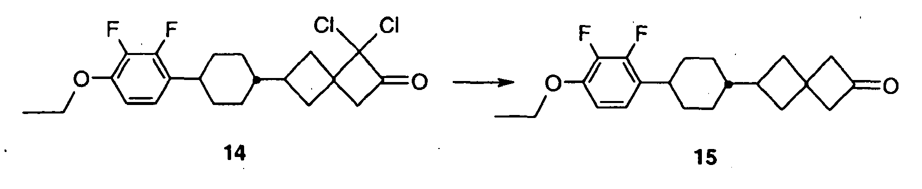

Die Reduktion des Dichlorcyclobutanons (13,7 g; 26,4 mmol) erfolgt mit Zinkstaub (13,0 g; 0,19 mol) in 150 ml Eisessig analog Beispiel 1.2. Das Rohprodukt in Form gelber Kristalle wird mit 1 l Dichlormethan über Kieselgel eluiert. Farblose Kristalle (15).

### Beispiel 2.4

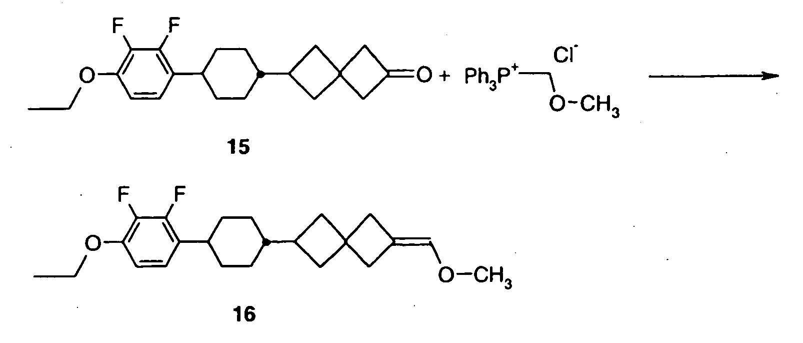

Das Spiro[3.3]heptanon (15) wird in 50 ml trockenem THF suspendiert und bei 5 °C tropfenweise mit Kalium-*tert*-butylat (2,60 g; 23,1 mmol) in 50 ml THF versetzt. Die Reaktionsmischung wird 12 h bei RT gerührt und wie bei der Wittig-Reaktion aus Beispiel 1.3 aufgearbeitet. Die Reinigung erfolgt über Kieselgel mit Dichlormethan. Farblose Kristalle (16).

### Beispiel 2.5

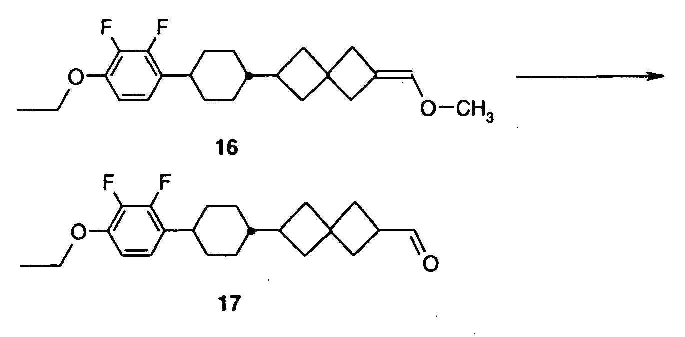

Der Enolether (16) (3,80 g; 10,0 mol) wird zusammen mit Ameisensäure (10,0 ml; 0,26 mol) in 100 ml Toluol 12 h kräftig bei RT gerührt. Die Phasen werden getrennt; die wässrige Phase wird zweimal mit Toluol extrahiert. Die vereinigten organischen Phase werden mit Wasser und gesättigter NaCl-Lösung gewaschen, über Na₂SO₄ getrocknet und im Vakuum eingeengt. Gelbes Öl (17).

### Beispiel 2.6

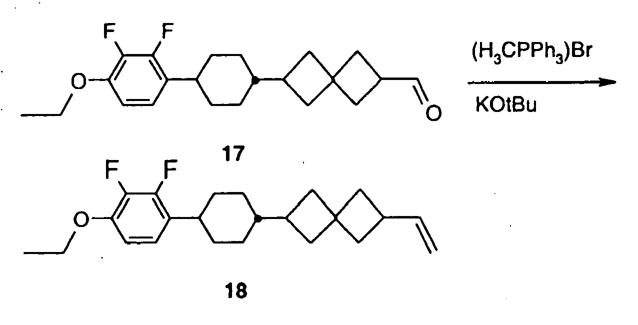

Der Spiro[3.3]heptanaldehyd (17) (3,80 g; 10,4 mmol) gelöst in 50 ml THF wird bei 0-5 °C zu einer Reaktionsmischung getropft, die aus Methyltriphenylphosphoniumbromid (5,00 g; 13,9 mmol) suspendiert in 30 ml THF durch langsame Zugabe von Kalium-*tert*-butylat (1,60 g; 14,2 mmol) in 20 ml THF hergestellt wird. Nach der Zugabe wird das Kühlbad entfernt und bei RT 1 h gerührt. Die Reaktionsmischung wird analog Beispiel 1.3 aufgearbeitet. Das Rohprodukt aus gelben Kristallen wird mit 1-Chlorbutan über Kieselgel gereinigt und mit Ethanol umkristallisiert. Farblose Kristalle (18). Schmp. 87 °C.
K 87 SmB (24) N 107 l; Klp. 103 °C; Δε -6,1; Δn 0,103; γ₁ 305 mPa·s.

### Beispiel 2.7

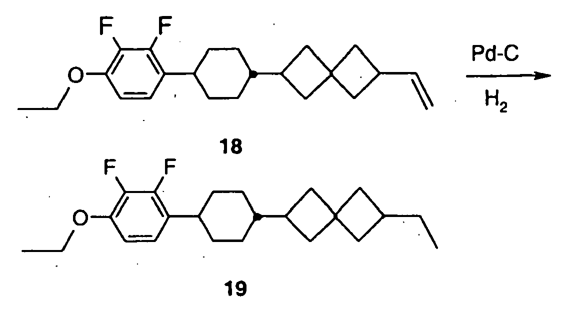

Das Alken (18) (1,50 g; 4,12 mmol) wird mit Palladium auf Kohle (5 %; 0,50 g) bei RT unter Wasserstoffatmosphäre in 60 ml THF während 27 h hydriert. Nach Filtration mit Dichlormethan über Kieselgel wird durch Umkristallisieren bei -20 °C aus Ethanol gereinigt. Farblose Kristalle (19). Schmp. 67 °C
K 67 SmB (59) N 103 l; Klp. 101 °C; Δε -5,8; Δn 0,093; γ₁ 271 mPa·s.

### Beispiel 3.1

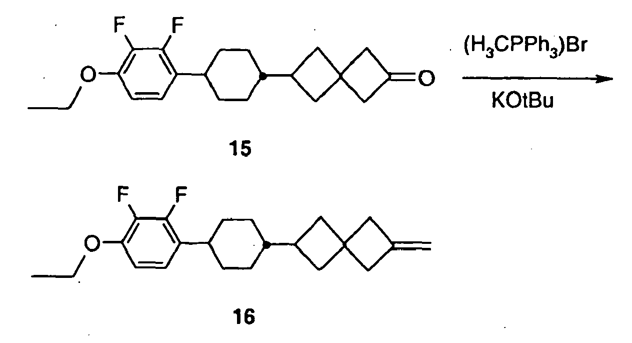

Aus dem Keton (15) (1,40 g; 3,92 mmol), Methyltriphenylphosphoniumbromid (2,10 g; 5,87 mmol) und Kalium-*tert*-butylat (0,65 g; 5,89 mmol) wird analog Beispiel 2.6 das Alken (16) hergestellt. Das gelbe Öl wird ebenso aufgereinigt. Farblose Kristalle (16). Schmp. 85 °C.
K 85 N (66) l; Klp. 60 °C; Δε -5,5; Δn 0,095.

### Beispiel 3.2

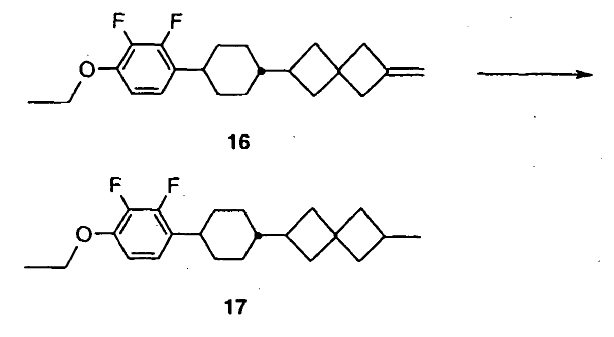

Das Alken (16) (13,7 g; 26,4 mmol) wird analog Beispiel 2.7 hydriert und aufgereinigt. Farblose Kristalle (17). Schmp. 75 °C.
K 75 N 83 l; Klp. 81 °C; Δε -5,8; Δn 0,089; γ₁ 232 mPa·s.

### Beispiel 4.1

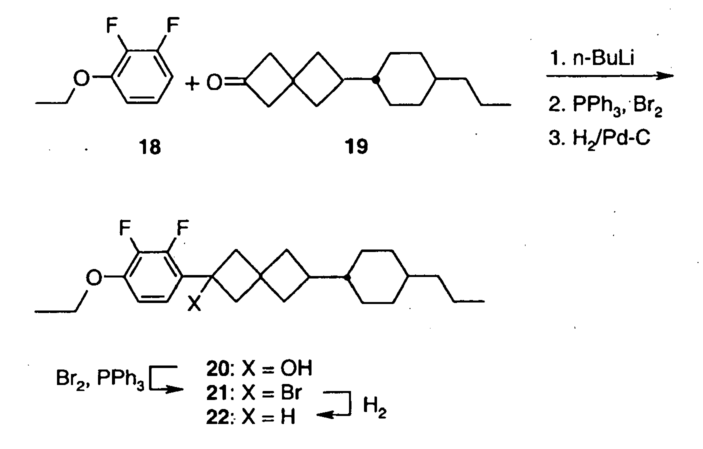

Das Ethoxydifluorbenzol (18) (4,73 g; 29,9 mmol) wird in 10 ml trockenem THF gelöst bei -70 °C mit *n*-BuLi in Hexan (15 %; 18,2 ml; 29,9 mmol) so versetzt, dass die Temperatur nicht über -65 °C steigt. Nach 1 h Rühren wird das Keton (7,00 g; 29,8 mmol) in 20 ml THF langsam zugetropft (< -65 °C). Das Kältebad wird entfernt und die Mischung 12 h bei RT gerührt. Der Ansatz wird mit Wasser hydrolysiert, mit konzentrierter Salzsäure auf pH 5-7 eingestellt und die organische Phase abgetrennt. Nach Trocknen und Einengen erhält man das Rohprodukt, das mit Dichlormethan an Kieselgel chromatographisch gereinigt wird.

### Reaktion (20) nach (21):

Zu einer Lösung aus Triphenylphosphin (7,43 g; 28,0 mmol) in 40 ml Acetonitril wird bei 0-5 °C während 5 min Brom (1,45 ml; 28 mmol) zugetropft, 1 h bei 0 °C gerührt und dazu der Alkohol (18) (11,0 g; 28,0 mmol) gegeben. Nach 24 h Rühren bei RT wird im Vakuum das Lösemittel entfernt, mit Heptan (200 ml) aufgenommen und 30 min kräftig gerührt. Die Lösung wird filtriert und der Rückstand mit Heptan nachgewaschen. Nach Entfernen des Lösungsmittels im Vakuum erhält man das Rohprodukt (21), das an Kieselgel mit Pentan-1-Chlorbutan chromatographisch gereinigt wird.

### Reaktion (21) nach (22):

Das Bromid (21) (3,30 g; 7,24 mmol) wird in 20 ml THF während 20 h mit Triethylamin (1,5 g; 14,8 mol) und Palladium auf Kohle (5 %; 0,83 g) bei 60 °C unter 5 bar Wasserstoff umgesetzt. Nach Filtration wird das Lösemittel im Vakuum entfernt. Das Produkt (22) wird mit Dichlormethan über Kieselgel gereinigt und mit Ethanol zur Kristallisation gebracht. Farblose Kristalle (22). Schmp. 96 °C.
K 96 SmB (93) N 131 l; Klp. 138 °C; Δε -5,2; Δn 0,111; γ₁ 308 mPa·s.

### Beispiel 5

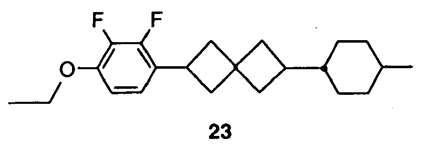

Analog Beispiel 4.1 wird die Verbindung (22a) hergestellt. Farblose Kristalle (23). Schmp. 94 °C.
K 94 N (79) l; Klp. 78 °C; Δε -5,6; Δn 0,099; γ₁ 180 mPa·s.

### Beispiel 6

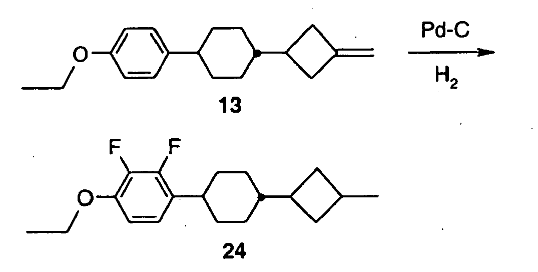

Analog der Hydrierung in Beispiel 1.9 wird aus (13), hergestellt in Beispiel 2.1, das methylsubstituierte Derivat (24) durch Hydrieren an Pd-C während 22 h bei RT hergestellt.
K 53 l; Klp. 12 °C; Δε -5,6; Δn 0,069; γ₁ 142 mPa·s.

### Beispiel 7

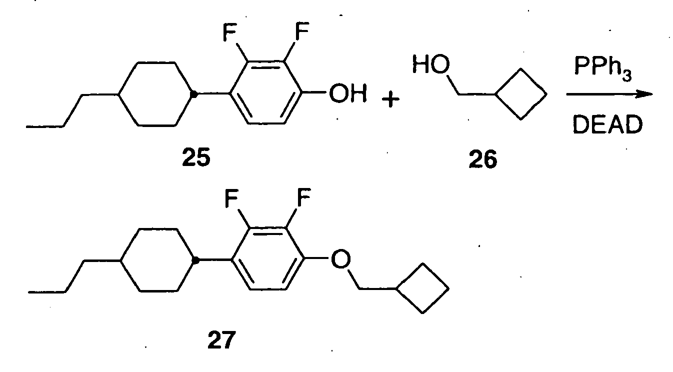

Zu einer Lösung aus dem Phenol (25) (3,00 g; 11,8 mmol), Hydroxymethylcyclobutan (26) (1,20 ml; 12,8 mmol) und Triphenylphosphin (3,40 g; 13,0 mmol) in 50 ml THF wird Diisopropylazodicarboxylat (2,5 ml; 12,7 mmol) zugetropft. Nach 1 h weiter Rühren wird das Lösungsmittel im Vakuum abgezogen. Die Reinigung erfolgt durch Filtration über Kieselgel mit 1-Chlorbutan und Umkristallisieren durch Zugabe von Ethanol und Kühlen auf -20 °C.
(27). Schmp. 40 °C.
K 40 l; Klp. -48 °C; Δε -4,9; Δn 0,043; γ₁ 205 mPa·s.

## Patentansprüche

1. Verbindung der allgemeinen Formel I, 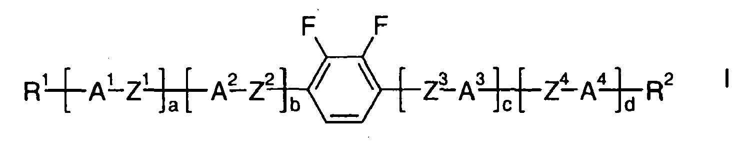 worin, jeweils unabhängig voneinander, gleich oder verschieden,
R¹ und R² Wasserstoff, ein unsubstituiertes, oder ein einfach oder mehrfach mit F substituiertes Alkanyl, Alkoxy, Alkenyl oder Alkinyl mit bis zu 15 Kohlenstoffatomen bedeuten, wobei in diesen Resten auch eine oder mehrere CH₂-Gruppen jeweils unabhängig voneinander durch -O-, -S-, -SO₂-, -CO-, -(CO)O-, -O(CO)- oder -O(CO)-O- so ersetzt sein können, dass Heteroatome nicht direkt verknüpft sind, oder eine Gruppe der Formel 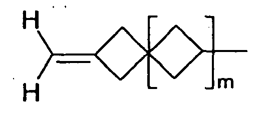
A¹, A², A³ und A⁴ 1,4-Cyclohexylen, worin auch ein oder zwei CH₂ gegen O ersetzt sein können, 1,4-Phenylen, das unsubstituiert oder ein- oder zweifach mit F substituiert sein kann oder ein Strukturelement der Formel 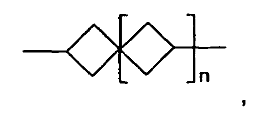
Z¹, Z², Z³ und Z⁴ eine Einfachbindung, -CF₂O-, -OCF₂-, -CH₂CH₂-, -CF₂CF₂-, -CF₂CH₂-, -CH₂CF₂-, -CHF-CHF-, -(CO)O-, -O(CO)-, -CH₂O-, -OCH₂-, -CF=CH-, -CH=CF-, -CF=CF-, -CH=CH- oder -C≡C-;
a, b, c und d 0, 1 oder 2, und
n, m 0 oder 1 bedeuten,
**dadurch gekennzeichnet, dass**
mindestens eine Gruppe aus R¹ und R² ein Strukturelement der Formel 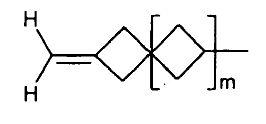 oder
mindestens eine Gruppe aus A¹, A², A³ und A⁴ ein Strukturelement der Formel 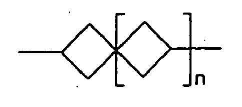 bedeutet.

2. Verbindung nach Anspruch 1, **dadurch gekennzeichnet, dass**
R¹ ein Strukturelement der Formel 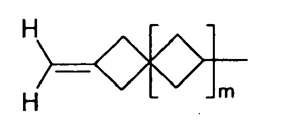
bedeutet.

3. Verbindung nach Anspruch 1 oder 2, **dadurch gekennzeichnet, dass** mindestens ein Ringelement aus A¹, A², A³ und A⁴ ein Strukturelement der Formel 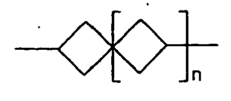 ist.

4. Verbindung nach einem oder mehreren der Ansprüche 1 bis 3, **dadurch gekennzeichnet, dass**
m und n 1 ist.

5. Verbindung nach einem oder mehreren der Ansprüche 1 bis 3, **dadurch gekennzeichnet, dass**
m und n 0 ist.

6. Verbindung nach einem oder mehreren der Ansprüche 1 bis 5, **dadurch gekennzeichnet, dass**
c und d 0 ist.

7. Verbindung nach einem oder mehreren der Ansprüche 1 bis 6, **dadurch gekennzeichnet, dass**
R² 1-8 C Alkyloxy oder Alkenyloxy bedeutet.

8. Verbindung nach einem oder mehreren der Ansprüche 1 bis 7, **dadurch gekennzeichnet, dass**
Z¹, Z², Z³ und Z⁴ unabhängig voneinander eine Einfachbindung, -CH₂O- oder -OCH₂- bedeuten.

9. Verfahren zur Herstellung von Verbindungen der Formel I nach einem oder mehreren der Ansprüche 1 bis 8, **dadurch gekennzeichnet, dass** in mindestens einem Verfahrensschritt ein endständiges Alken an der Doppelbindung unter Verwendung von Trichloracetylchlorid zu einer 2,2-Dichlorcyclobutan-1-on-3-yl-Verbindung umgesetzt wird.

10. Verwendung einer Verbindung der Formel I nach einem oder mehreren der Ansprüche 1 bis 8 in flüssigkristallinen Medien.

11. Flüssigkristallines Medium mit mindestens zwei flüssigkristallinen Verbindungen, **dadurch gekennzeichnet, dass** es mindestens eine Verbindung der Formel I nach einem oder mehreren der Ansprüche 1 bis 8 enthält.

12. Elektrooptisches Anzeigeelement, enthaltend ein flüssigkristallines Medium gemäß Anspruch 11.

## Claims

1. Compound of the general formula I 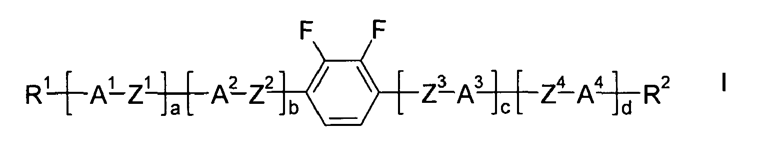 in which, in each case independently of one another, identically or differently,
R¹ and R² denote hydrogen, an alkanyl, alkoxy, alkenyl or alkynyl having up to 15 carbon atoms which is unsubstituted or mono- or polysubstituted by F, where, in addition, one or more CH₂ groups in these radicals may each be replaced, independently of one another, by -O-, -S-, -SO₂-, -CO-, -(CO)O-, -O(CO)- or -O(CO)-O- in such a way that heteroatoms are not linked directly, or a group of the formula 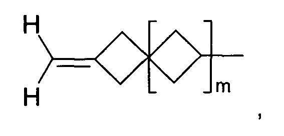
A¹, A², A³ and A⁴ denote 1,4-cyclohexylene, in which, in addition, one or two CH₂ may be replaced by O, 1,4-phenylene, which may be unsubstituted or mono- or disubstituted by F, or a structural element of the formula 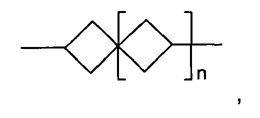
Z¹, Z², Z³ and Z⁴ denote a single bond, -CF₂O-, -OCF₂-, -CH₂CH₂-, -CF₂CF₂-, -CF₂CH₂-, -CH₂CF₂-, -CHF-CHF-, -(CO)O-, -O(CO)-, -CH₂O-, -OCH₂-, -CF=CH-, -CH=CF-, -CF=CF-, -CH=CH- or -C≡C-,
a, b, c and d denote 0, 1 or 2, and
n, m denote 0 or 1,
**characterised in that**
at least one group from R¹ and R² denotes a structural element of the formula 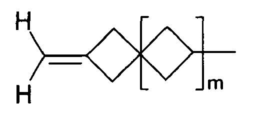 or
at least one group from A¹, A², A³ and A⁴ denotes a structural element of the formula

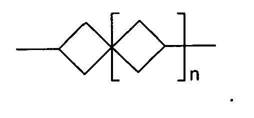

2. Compound according to Claim 1, **characterised in that**
R¹ denotes a structural element of the formula

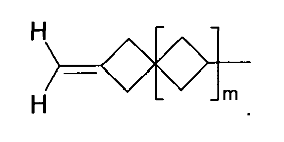

3. Compound according to Claim 1 or 2, **characterised in that** at least one ring element from A¹, A², A³ and A⁴ is a structural element of the formula

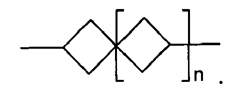

4. Compound according to one or more of Claims 1 to 3, **characterised in that**
m and n are 1.

5. Compound according to one or more of Claims 1 to 3, **characterised in that**
m and n are 0.

6. Compound according to one or more of Claims 1 to 5, **characterised in that**
c and d are 0.

7. Compound according to one or more of Claims 1 to 6, **characterised in that**
R² denotes 1-8 C alkoxy or alkenyloxy.

8. Compound according to one or more of Claims 1 to 7, **characterised in that**
Z¹, Z², Z³ and Z⁴, independently of one another, denote a single bond, -CH₂O- or -OCH₂-.

9. Process for the preparation of compounds of the formula I according to one or more of Claims 1 to 8, **characterised in that**, in at least one process step, a terminal alkene is converted at the double bond into a 2,2-dichlorocyclobutan-1-on-3-yl compound using trichloroacetyl chloride.

10. Use of a compound of the formula I according to one or more of Claims 1 to 8 in liquid-crystalline media.

11. Liquid-crystalline medium having at least two liquid-crystalline compounds, **characterised in that** it comprises at least one compound of the formula I according to one or more of Claims 1 to 8.

12. Electro-optical display element containing a liquid-crystalline medium according to Claim 11.

## Revendications

1. Composé de formule générale I 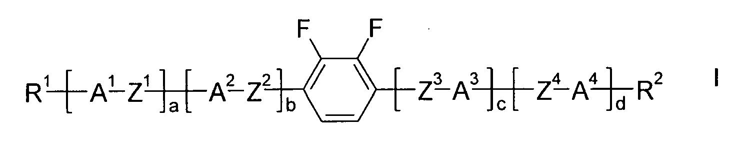 dans laquelle, dans chaque cas indépendamment les uns des autres, de manière identique ou différente,
R¹ et R² désignent hydrogène, un radical alcanyle, alcoxy, alcé- nyle ou alcynyle ayant jusqu'à 15 atomes de carbone, qui est non substitué ou mono- ou polysubstitué par F, où, en outre, un ou plusieurs groupements CH₂ dans ces radicaux peuvent être rem- placés chacun, indépendamment les uns des autres, par -O-, -S-, -SO₂-, -CO-, -(CO)O-, -O(CO)- ou -O(CO)-O- de telle manière que les hétéroatomes ne soient pas liés directement, ou un groupement de formule 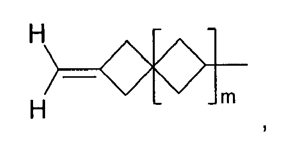
A¹, A², A³ et A⁴ désignent 1,4-cyclohexylène, où, en outre, un ou deux groupements CH₂ peuvent être remplacés par O, 1,4- phénylène, pouvant être non substitué ou mono- ou disubstitué par F, ou un élément structural de formule 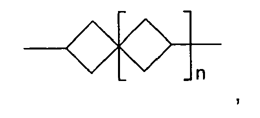
Z¹, Z², Z³ et Z⁴ désignent une liaison simple, -CF_{2O}-, -OCF₂-, -CH₂CH₂-, -CF₂CF₂-, -CF₂CH₂-, -CH₂CF₂-, -CHF-CHF-, -(CO)O-, -O(CO)-, -CH₂O-, -OCH₂-, -CF=CH-, -CH=CF-, -CF=CF-, -CH=CH- ou -C=C-,
a, b, c et d désignent 0, 1 ou 2, et
n, m désignent 0 ou 1,
**caractérisé en ce que**
au moins un groupement choisi parmi R¹ et R² désigne un élément structural de formule 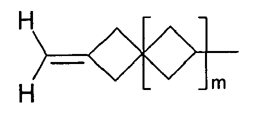 ou
au moins un groupement choisi parmi A¹, A², A³ et A⁴ désigne un élément structural de formule

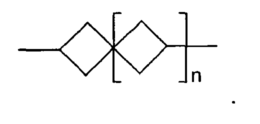

2. Composé selon la revendication 1, **caractérisé en ce que**
R¹ désigne un élément structural de formule

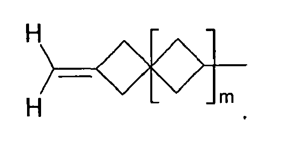

3. Composé selon la revendication 1 ou 2, **caractérisé en ce que** au moins un sommet choisi parmi A¹, A², A³ et A⁴ est un élément structural de formule

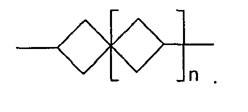

4. Composé selon l'une ou plusieurs des revendications 1 à 3, **caractérisé en ce que**
m et n valent 1.

5. Composé selon l'une ou plusieurs des revendications 1 à 3, **caractérisé en ce que**
m et n valent 0.

6. Composé selon l'une ou plusieurs des revendications 1 à 5, **caractérisé en ce que**
c et d valent 0.

7. Composé selon l'une ou plusieurs des revendications 1 à 6, **caractérisé en ce que**
R² désigne 1-8 C alcoxy ou alcényloxy.

8. Composé selon l'une ou plusieurs des revendications 1 à 7, **caractérisé en ce que**
Z¹, Z², Z³ et Z⁴, indépendamment les uns des autres, désignent une liaison simple, -CH₂O- ou -OCH₂-.

9. Procédé de préparation de composés de formule I selon l'une ou plusieurs des revendications 1 à 8, **caractérisé en ce que**, dans au moins une étape du procédé, un alcène terminal est converti au niveau de la double liaison en un composé de 2,2-dichlorocyclo-butan-1-on-3-yle en utilisant du chlorure de trichloracétyle.

10. Utilisation d'un composé de formule I selon l'une ou plusieurs des revendications 1 à 8 dans des milieux à cristaux liquides.

11. Milieu à cristaux liquides comportant au moins deux composés à cristaux liquides, **caractérisé en ce qu'**il comprend au moins un composé de formule I selon l'une ou plusieurs des revendications 1 à 8.

12. Elément d'affichage électro-optique contenant un milieu à cristaux liquides selon la revendication 11.
